# EUROPEAN PATENT APPLICATION

(11) **EP 4 661 550 A1**
(43) Date of publication of application: **10.12.2025**
(21) Application number: 23918995.4
(22) Date of filing: 31.01.2023
(51) Int. Cl.: H04W 72/21

(54) **INFORMATION TRANSMISSION METHOD AND APPARATUS, DEVICE, MEDIUM, AND PROGRAM PRODUCT**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN); YOU, Xin, Dongguan, Guangdong 523860 (CN)
(74) Representative: Taor, Simon Edward William
(86) International application number: PCT/CN2023/074018
(87) International publication number: WO 2024/159414

(57) **Abstract**

This disclosure discloses an information transmission method and apparatus, a device, a medium, and a program product, and belongs to the field of communication. The method is performed by a first device and includes the following. The first device transmits artificial intelligence (AI) information by using a transmission resource configuration sent by a second device, where the AI information is information related to an AI/machine learning (ML) model. According to the method, the first device transmits AI information by using a transmission resource configuration sent by the second device, where the AI information is information related to an AI/ML model, thereby realizing a bidirectional sharing mechanism of the AI information. In other words, the first device can not only receive the AI information from the second device, but also send the AI information to the second device, thereby expanding a manner for obtaining the AI information.

## Description

### TECHNICAL FIELD

Embodiments of the disclosure relate to the field of communication, and in particular, to an information transmission method and apparatus, a device, a medium, and a program product.

### BACKGROUND

With the continuous development of artificial intelligence (Al) and machine learning (ML) technologies, a combination of communication technology and AI/ML technology is one of future communication trends. To adapt to the complexity and diversity of a scenario of a communication system, an AI/ML model is introduced in the communication system.

How to transmit information related to the AI/ML model between devices is a problem to be solved.

### SUMMARY

An information transmission method and apparatus, a device, a medium, and a program product are provided in the disclosure. The technical solution at least includes the following.

According to an aspect of embodiments of the disclosure, an information transmission method is provided. The method is performed by a first device and includes the following. The first device transmits artificial intelligence (AI) information by using a transmission resource configuration sent by a second device, where the AI information is information related to an AI/machine learning (ML) model.

According to another aspect of embodiments of the disclosure, an information transmission method is provided. The method is performed by a second device and includes the following. The second device transmits AI information by using a transmission resource configuration sent to a first device, where the AI information is information related to an AI/ML model.

According to another aspect of embodiments of the disclosure, an information transmission apparatus is provided. The apparatus includes a first transmitting module. The first transmitting module is configured to transmit AI information by using a transmission resource configuration sent by a second device, where the AI information is information related to an AI/ML model.

According to another aspect of embodiments of the disclosure, an information transmission apparatus is provided. The apparatus includes a second transmitting module. The second transmitting module is configured to transmit AI information by using a transmission resource configuration sent to a first device, where the AI information is information related to an AI/ML model.

According to another aspect of embodiments of the disclosure, a first device is provided. The first device includes: a processor; a transceiver coupled with the processor; and a memory configured to store executable instructions of the processor. The processor is configured to load and execute the executable instructions to implement the information transmission method in the above aspects.

According to another aspect of embodiments of the disclosure, a second device is provided. The second device includes: a processor; a transceiver coupled with the processor; and a memory configured to store executable instructions of the processor. The processor is configured to load and execute the executable instructions to implement the information transmission method in the above aspects.

According to another aspect of embodiments of the disclosure, a computer-readable storage medium is provided. The computer-readable storage medium is configured to store at least one instruction, at least one program, a code set, or an instruction set which is loaded and executed by a processor to implement the information transmission method in the above aspects.

According to another aspect of embodiments of the disclosure, a computer program product or a computer program is provided. The computer program product or the computer program includes computer instructions which are stored in a computer-readable storage medium. A processor reads the computer instructions from the computer-readable storage medium and executes the computer instructions, such that the first device or the second device performs the information transmission method in the above aspects.

The technical solution provided in embodiments of the disclosure at least has the following beneficial effects.

In the disclosure, a first device transmits AI information by using a transmission resource configuration sent by a second device, where the AI information is information related to an AI/ML model, thereby realizing a bidirectional sharing mechanism of the AI information. In other words, the first device can not only receive the AI information from the second device, but also send the AI information to the second device, thereby expanding a manner for obtaining the AI information.

### BRIEF DESCRIPTION OF THE DRAWINGS

In order to describe more clearly technical solutions of embodiments of the disclosure, the following will give a brief introduction to the accompanying drawings used for describing the embodiments. Apparently, the accompanying drawings described below are merely some embodiments of the disclosure. Based on these drawings, those of ordinary skill in the art can also obtain other drawings without creative effort.
FIG. 1 is a schematic diagram of a network architecture provided in an exemplary embodiment of the disclosure.
FIG. 2 is a schematic diagram of a network system architecture provided in an exemplary embodiment of the disclosure.
FIG. 3 is a flowchart of an information transmission method provided in an exemplary embodiment of the disclosure.
FIG. 4 is a flowchart of an information transmission method provided in an exemplary embodiment of the disclosure.
FIG. 5 is a flowchart of an information transmission method provided in an exemplary embodiment of the disclosure.
FIG. 6 is a flowchart of an information transmission method provided in an exemplary embodiment of the disclosure.
FIG. 7 is a flowchart of an information transmission method provided in an exemplary embodiment of the disclosure.
FIG. 8 is a flowchart of an information transmission method provided in an exemplary embodiment of the disclosure.
FIG. 9 is a flowchart of an information transmission method provided in an exemplary embodiment of the disclosure.
FIG. 10 is a flowchart of an information transmission method provided in an exemplary embodiment of the disclosure.
FIG. 11 is a block diagram of an information transmission apparatus provided in an exemplary embodiment of the disclosure.
FIG. 12 is a block diagram of an information transmission apparatus provided in an exemplary embodiment of the disclosure.
FIG. 13 is a block diagram of an information transmission apparatus provided in an exemplary embodiment of the disclosure.
FIG. 14 is a block diagram of an information transmission apparatus provided in an exemplary embodiment of the disclosure.
FIG. 15 is a block diagram of an information transmission apparatus provided in an exemplary embodiment of the disclosure.
FIG. 16 is a block diagram of an information transmission apparatus provided in an exemplary embodiment of the disclosure.
FIG. 17 is a schematic structural diagram of a first device or a second device provided in an exemplary embodiment of the disclosure.

### DETAILED DESCRIPTION

In order to make the objectives, technical solutions, and advantages of the disclosure clearer, embodiments of the disclosure will be further described in detail below with reference to the accompanying drawings.

Exemplary embodiments will be described in detail herein, and examples of these embodiments are illustrated in the accompanying drawings. When the following descriptions relate to the accompanying drawings, unless otherwise stated, the same numerals in different accompanying drawings refer to the same or similar elements. The embodiments described in the following exemplary embodiments are not intended to represent all embodiments consistent with the embodiments of the disclosure. Instead, they are merely examples of apparatuses and methods consistent with some aspects of the disclosure as elaborated in the appended claims.

The terms used in the disclosure are merely intended for describing the particular embodiments, rather than limiting the disclosure. The singular form "alan", "said", "above", and "the" used in the disclosure and the appended claims are also intended to include multiple forms, unless otherwise specified in the context. It may be also understood that, the term "and/or" used herein refers to any or all of possible combinations of one or more associated items that are listed.

It may be noted that, user information (including, but not limited to, user equipment information, user personal information, etc.) and data (including, but not limited to, data for analysis, stored data, displayed data, etc.) involved in the disclosure are all information and data authorized by the user or fully authorized by all parties, and the collection, use, and processing of related data shall comply with the related laws, regulations, and standards of the related countries and regions.

It may be understood that, although the terms "first", "second", and the like may be used in the disclosure to describe various information, such information will not be limited to these terms. These terms are merely used for distinguishing the same type of information from each other. For example, without departing from the scope of the disclosure, a first parameter may be also referred to as a second parameter, and similarly, the second parameter may be also referred to as the first parameter, depending on the context. For example, the word "if" used herein may be interpreted as "at...", or "when...", or "in response to a determination".

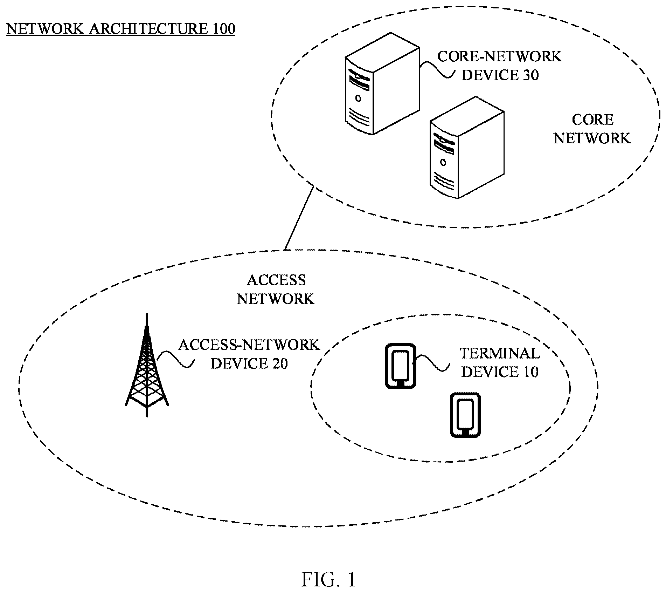

FIG. 1 is a schematic diagram of a network architecture 100 provided in an exemplary embodiment of the disclosure. The network architecture 100 includes a terminal device 10, an access-network device 20, and a core-network device 30.

The terminal device 10 may refer to a user equipment (UE), an access terminal, a subscriber unit, a subscriber station, a mobile station, a remote station, a remote terminal, a mobile device, a wireless communication device, a user agent, or a user device. Optionally, the terminal device 10 may be also a cellular radio telephone, a cordless telephone, a session initiation protocol (SIP) telephone, a wireless local loop (WLL) station, a personal digital assistant (PDA), a device with wireless communication functions such as a handheld device, a computing device, or other processing devices coupled with a wireless modem, an in-vehicle device, a wearable device, a terminal device in the 5th generation system (5GS), or a terminal device in a future evolved public land mobile network (PLMN), or the like. Embodiments of the disclosure are not limited in this regard. For the convenience of illustration, the above devices are collectively referred to as the "terminal device". The number of terminal devices 10 is usually multiple, and there may be one or more terminal devices 10 in each cell managed by the access-network device 20.

The access-network device 20 is a device deployed in an access network to provide a wireless communication function for the terminal device 10. The access-network device 20 may include various forms of macro base stations, micro base stations, relay stations, access points, and the like. In systems adopting different radio access technologies, devices having a function of the access-network device may be in different names, for example, in a 5G new radio (NR) system, such a device is referred to as a gNodeB or a gNB. With evolution of communication technologies, the name "access-network device" may change. For the convenience of illustration, in embodiments of the disclosure, the above apparatus for providing a wireless communication function for the terminal device 10 is collectively referred to as the "access-network device". Optionally, via the access-network device 20, the terminal device 10 and the core-network device 30 can establish a communication relationship. Exemplarily, in a long term evolution (LTE) system, the access-network device 20 may be an evolved universal terrestrial radio access network (EUTRAN) or one or more evolutional Node B (eNB or eNodeB) in the EUTRAN; and in the 5G NR system, the access-network device 20 may be a radio access network (RAN) or one or more gNBs in the RAN. In embodiments of the disclosure, unless otherwise specified, a network device refers to the access-network device 20, such as a base station.

The core-network device 30 is a device deployed in a core network. The functions of the core-network device 30 are mainly to provide a user connection, manage a user, and complete service bearing, and the core-network device 30 is used as an interface provided by a bearer network for an external network. For example, the core-network device in the 5G NR system may include an access and mobility management function (AMF) network element, a user plane function (UPF) network element, a session management function (SMF) network element, and the like.

In some embodiments, the access-network device 20 and the core-network device 30 communicate with each other by using some air interface technology, such as an NG interface in the 5G NR system. The access-network device 20 and the terminal device 10 communicate with each other by using some air interface technology, such as a Uu interface.

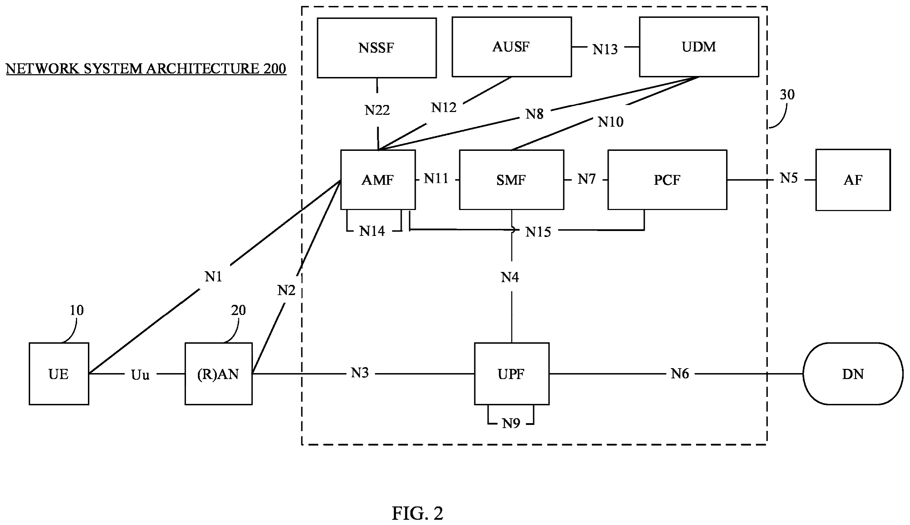

FIG. 2 is a schematic diagram of a network system architecture 200 provided in an exemplary embodiment of the disclosure. The network system architecture 200 includes a terminal device 10, an access-network device 20, and a core-network device 30.

The core-network device 30 includes a network slice selection function (NSSF), an authentication server function (AUSF), a unified data management (UDM), an AMF, an SMF, a policy control function (PCF), a UPF, and a sensing function (SF).

A UE performs access stratum (AS) connection with an access network (AN) through a Uu interface, to exchange AS messages and perform wireless data transmission. The UE performs non-access stratum (NAS) connection with the AMF through an N1 interface, to exchange NAS messages. The AMF is a mobility management function in a core network, and the SMF is a session management function in the core network. In addition to the mobility management for the UE, the AMF is also responsible for forwarding a session management-related message between the UE and the SMF. The PCF is a policy management function in the core network and is responsible for formulating policies related to mobility management, session management, and charging for the UE. The PCF performs data transmission with an external application function (AF) through an N5 interface. The UPF is a user plane function in the core network, performs data transmission with an external data network (DN) through an N6 interface, and performs data transmission with the AN through an N3 interface.

The "5G NR system" in embodiments of the disclosure may be also referred to as a 5G system or an NR system, but the meaning thereof can be understood by those skilled in the art. The technical solutions described in the embodiments of the disclosure may be applied to an LTE system, or may be applied to the 5G NR system, or may be applied to a future evolved system of the 5G NR system, or may be applied to other communication systems such as a narrow band internet of things (NB-IoT) system, which is not limited in the disclosure.

The first device and the second device involved in embodiments of the disclosure satisfy at least one of the following scenarios. Scenario 1: the first device is a terminal device, and the second device is a network device. Scenario 2: the first device is the network device, and the second device is the terminal device. Scenario 3: the first device and the second device each are the terminal device. Scenario 4: the first device and the second device each are the network device. The network device is an access-network device or a core-network device.

The access-network device includes at least one of: a gNB, a centralized unit (CU), a distributed unit (DU), a centralized unit-control plane (CU-CP), or a centralized unit-user plane (CU-UP).

The core-network device includes at least one of: an NSSF network element, an AMF network element, an AUSF network element, a UPF network element, an SMF network element, a location management function (LMF) network element, a PCF network element, a UDM network element, an SF network element, or a network data analytics (NWDAF) network element.

With the continuous development of artificial intelligence (AI) and machine learning (ML) technologies, a combination of communication technology and AI/ML technology is one of future communication trends. To adapt to the complexity and diversity of a scenario of a communication system, an AI/ML model is introduced in the communication system. Generally, since a terminal device has limited resources and capabilities compared with a network device, downloading a trained AI/ML model from the network device is more in line with the actual situation than local training of the AI/ML model on the terminal device. However, how the terminal device downloads the AI/ML model from the network device or how the terminal device sends/uploads information related to the AI/ML model to the network device is a problem to be solved.

### For an embodiment in which a first device transmits AI information

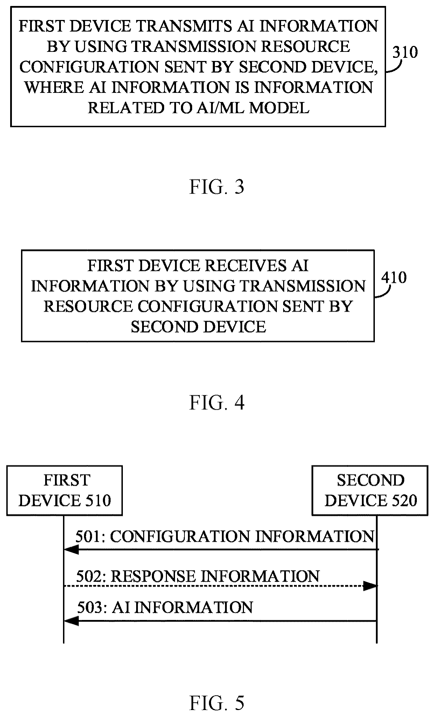

FIG. 3 is a flowchart of an information transmission method provided in an exemplary embodiment of the disclosure. The method is performed by a first device, and at least includes the following.

At 310, the first device transmits AI information by using a transmission resource configuration sent by a second device, where the AI information is information related to an AI/ML model.

In some embodiments, the AI model and the ML model are considered as parallel concepts. In some embodiments, the AI model and the ML model are considered as hypernym and hyponym concepts, and the ML model is a subtype of the AI model.

Optionally, the first device transmits the AI information by using the transmission resource configuration sent by the second device as follows. The first device receives the AI information by using the transmission resource configuration sent by the second device, and/or the first device sends the AI information by using the transmission resource configuration sent by the second device.

Optionally, the transmission resource configuration includes at least one of: (1) at least one radio bearer (RB) identity information; (2) model identity information associated with the AI information; (3) session identity information associated with the AI information; (4) number information associated with the last AI information data packet corresponding to the AI information; (5) information of the total number of AI information data packets corresponding to the AI information; (6) data importance-level indication information associated with the AI information; (7) data quality of service (QoS) parameter information associated with the AI information; (8) model description information associated with the AI information; (9) a related configuration of a first functional entity; (10) destination identity information associated with the AI information; or (11) number information associated with the first AI information data packet corresponding to the AI information.

### For (1) the at least one RB identity information

The AI information is transmitted on one or more RB resources, and the at least one RB identity information indicates a corresponding RB resource. These RB resources are used for transmission of the AI information.

### For (2) the model identity information associated with the AI information

The model identity information associated with the AI information is used for identifying an AI/ML model associated with the AI information.

The model identity information associated with the AI information is generally associated with one or more RB identities. One or more associated RB resources are used for transmission of AI information associated with the RB resource(s). The first device determines that an AI information data packet(s) transmitted on the RB resource(s) is used for reassembling AI information associated with an AI/ML model corresponding to the model identity information.

Exemplarily, the second device configures for the first device seven RB resources in total from RB1 to RB7 through the transmission resource configuration. Three RB resources in total from RB1 to RB3 are associated with AI/ML model identity 1, four RB resources in total from RB4 to RB7 are associated with AI/ML model identity 2, AI/ML model 1 corresponds to AI/ML model identity 1, and AI/ML model 2 corresponds to AI/ML model identity 2. In this case, the first device determines that AI information data packets transmitted on RB1 to RB3 are used for reassembling AI information associated with AI/ML model 1, and AI information data packets transmitted on RB4 to RB7 are used for reassembling AI information associated with AI/ML model 2.

When the above association is unclear, that is, the model identity information associated with the AI information is uncertain, the first device cannot distinguish and separately reassemble two AI information.

### For (3) the session identity information associated with the AI information

The session identity information associated with the AI information is used for identifying a session resource associated with the AI information.

A session connection needs to be established for data transmission, different data is transmitted on different session resources, and one session identity is generally associated with one or more RB identities.

An association between the session identity and the RB identity is notified to the first device through the transmission resource configuration. Based on the association, the first device distinguishes different session data borne on different RBs. The session identity information associated with the AI information may be a session identity specifically defined for transmission of the AI information, or may reuse an existing service session identity.

### For (4) the number information associated with the last AI information data packet corresponding to the AI information

The number information associated with the last AI information data packet corresponding to the AI information represents an ordering location of an AI information data packet in a set of AI information data packets to which the AI information data packet belongs.

Before one AI information is sent, the one AI information can be split into a set of AI information data packets. Each of the AI information data packets has unique number information, so that a receiver reassembles the set of AI information data packets into the one AI information according to the number information.

The implementation of the number information associated with the last AI information data packet corresponding to the AI information includes at least one of the following.

### Implementation 1: configured according to the granularity of the session identity or the granularity of the model identity information

Exemplarily, the second device configures for the first device three RB resources in total from RB1 to RB3 through the transmission resource configuration, where RB1 to RB3 are all used for transmission of AI information associated with AI/ML model identity 1. If the AI information associated with AI/ML model identity 1 is split by the second device into 8888 AI information data packets, and the AI information data packets are numbered from 0, then a packet number associated with the last AI information data packet corresponding to the AI information associated with AI/ML model identity 1 is 8887, i.e., number information associated with the last AI information data packet corresponding to the AI information. The first device determines, based on the number information, when to complete the reassembly of the whole AI information.

### Implementation 2: configured according to the granularity of the RB identity

Exemplarily, the second device configures for the first device three RB resources in total from RB1 to RB3 through the transmission resource configuration, where RB1 to RB3 are all used for transmission of AI information associated with AI/ML model identity 1. If the AI information associated with AI/ML model identity 1 is split by the second device into 7000 AI information data packets, and the AI information data packets are numbered from 0, where AI information data packets with numbers 0 to 1999 are transmitted on RB1, AI information data packets with numbers 2000 to 4999 are transmitted on RB2, and AI information data packets with numbers 5000 to 6999 are transmitted on RB3, then a value of number information associated with the last AI information data packet corresponding to AI information associated with RB1 is 1999, a value of number information associated with the last AI information data packet corresponding to AI information associated with RB2 is 4999, and a value of number information associated with the last AI information data packet corresponding to AI information associated with RB3 is 6999.

### For (5) the information of the total number of AI information data packets corresponding to the AI information

The information of the total number of AI information data packets corresponding to the AI information indicates the total transmission amount of AI information data packets.

The function of the information of the total number of AI information data packets corresponding to the AI information is similar to the function of the number information associated with the last AI information data packet corresponding to the AI information. However, the information of the total number of AI information data packets corresponding to the AI information does not provide number information of the AI information data packets. The reassembly of the AI information is indirectly controlled by indicating the total transmission amount of AI information data packets according to the information of the total number of AI information data packets.

The implementation of the information of the total number of AI information data packets corresponding to the AI information includes at least one of the following.

### Implementation 1: configured according to the granularity of the session identity or the granularity of the model identity information

Exemplarily, the second device configures for the first device three RB resources in total from RB1 to RB3 through the transmission resource configuration, where RB1 to RB3 are all used for transmission of AI information associated with AI/ML model identity 1. If the AI information associated with AI/ML model identity 1 is split by the second device into 8888 AI information data packets, then a value of information of the total number of AI information data packets corresponding to the AI information is 8888. The first device determines, based on the information of the total number of AI information data packets, when to complete the reassembly of the whole AI information.

### Implementation 2: configured according to the granularity of the RB identity

Exemplarily, the second device configures for the first device three RB resources in total from RB1 to RB3 through the transmission resource configuration, where RB1 to RB3 are all used for transmission of AI information associated with AI/ML model identity 1. If the AI information associated with AI/ML model identity 1 is split by the second device into 7000 AI information data packets, where 2000 AI information data packets are transmitted on RB1, 3000 AI information data packets are transmitted on RB2, and 2000 AI information data packets are transmitted on RB3, then a value of information of the total number of AI information data packets corresponding to AI information associated with RB1 is 2000, a value of information of the total number of AI information data packets corresponding to AI information associated with RB2 is 3000, and a value of information of the total number of AI information data packets corresponding to AI information associated with RB3 is 2000.

### For (6) the data importance-level indication information associated with the AI information

The data importance-level indication information associated with the AI information indicates the data importance degree of the AI information.

The data importance-level indication information associated with the AI information is generally configured according to the granularity of the RB identity. Since different information portions of the same AI information may have different importance degrees, in order to adopt different data transmission strategies for information portions of different importance degrees, the information portions of different importance degrees can be transmitted on different RB resources respectively, and different RB resources for transmission of the same AI information can be associated with different data transmission strategies.

Exemplarily, a data retransmission function is configured for data with a high data importance-level, and the data retransmission function is not configured for data with a low data importance-level. The hierarchical classification of the data importance-level indication information is not limited in the disclosure. For example, the data importance-level may be classified according to "non-important", "moderately non-important", "important", and "highly important". For another example, the data importance-level may be classified according to numbers 1, 2, 3, 4, 5, etc., where the smaller the number, the higher the importance-level, and the larger the number, the lower the importance-level.

### For (7) the data QoS parameter information associated with the AI information

The data QoS parameter information associated with the AI information indicates a data QoS parameter of the AI information.

The data QoS parameter information associated with the AI information has a similar function to the data importance-level indication information associated with the AI information, and is generally configured according to the granularity of the RB identity. Different RBs for transmission of the same AI information can be associated with different data QoS parameter information.

### For (8) the model description information associated with the AI information

The model description information associated with the AI information is used for describing a basic feature of the AI/ML model. The model description information associated with the AI information is configured according to the granularity of the session identity or the granularity of the model identity information. For specific meanings, reference can be made to the following introduction.

### For (9) the related configuration of the first functional entity

The first device includes at least one first functional entity. The related configuration of the first functional entity at least includes a model reassembly timer duration configuration and/or a silence timer duration configuration. One of functions associated with the first functional entity is to reassemble at least one AI information data packet delivered by a lower protocol layer or another protocol layer or another functional entity in the same protocol layer.

Due to constraints such as QoS requirements for data transmission, the first functional entity needs to take a model reassembly timer into consideration during the reassembly of the AI information data packet, where the model reassembly timer is associated with the model reassembly of the first functional entity. During running of the model reassembly timer, in the case where the first functional entity completes the reassembly of the AI information data packet, the first functional entity stops the running model reassembly timer. When the module reassembly timer expires, in the case where the first functional entity has not yet completed the reassembly of the AI information data packet, the first functional entity discards all received AI information data packets or discards an AI information data packet that has not been reassembled.

For a silence timer, the first functional entity starts or restarts the silence timer every time one AI information data packet is received by the first functional entity. During running of the silence timer, in the case where a new AI information data packet is received by the first functional entity, the silence timer is restarted. When the silence timer expires, in the case where no new AI information data packet is received by the first functional entity, the model reassembly timer is started.

### For (10) the destination identity information associated with the AI information

The first device includes at least one first functional entity. The destination identity information associated with the AI information can assist the first device in delivering the reassembled AI information. The first functional entity can route or deliver the AI information to a second functional entity based on the destination identity information associated with the AI information.

In some embodiments, the destination identity information associated with the AI information is used for determining an AI information transmission destination. The destination is the second functional entity, or a routing path of the destination includes the second functional entity.

### For (11) the number information associated with the first AI information data packet corresponding to the AI information

The number information associated with the first AI information data packet corresponding to the AI information represents an ordering location of an AI information data packet in a set of AI information data packets to which the AI information data packet belongs.

Similar to the implementation of the number information associated with the last AI information data packet corresponding to the AI information, the implementation of the number information associated with the first AI information data packet corresponding to the AI information includes at least one of the following.

### Implementation 1: configured according to the granularity of the session identity or the granularity of the model identity information

Exemplarily, the second device configures for the first device three RB resources in total from RB1 to RB3 through the transmission resource configuration, where RB1 to RB3 are all used for transmission of AI information associated with AI/ML model identity 1. If the AI information associated with AI/ML model identity 1 is split by the second device into 8888 AI information data packets, and the AI information data packets are numbered from 0, then a packet number associated with the first AI information data packet corresponding to the AI information associated with AI/ML model identity 1 is 0, i.e., number information associated with the first AI information data packet corresponding to the AI information. The first device determines, based on the number information, a data packet from which the reassembly of the whole AI information starts.

### Implementation 2: configured according to the granularity of the RB identity

Exemplarily, the second device configures for the first device three RB resources in total from RB1 to RB3 through the transmission resource configuration, where RB1 to RB3 are all used for transmission of AI information associated with AI/ML model identity 1. If the AI information associated with AI/ML model identity 1 is split by the second device into 7000 AI information data packets, and the AI information data packets are numbered from 0, where AI information data packets with numbers 0 to 1999 are transmitted on RB1, AI information data packets with numbers 2000 to 4999 are transmitted on RB2, and AI information data packets with numbers 5000 to 6999 are transmitted on RB3, then a value of number information associated with the first AI information data packet corresponding to AI information associated with RB1 is 0, a value of number information associated with the first AI information data packet corresponding to AI information associated with RB2 is 2000, and a value of number information associated with the first AI information data packet corresponding to AI information associated with RB3 is 5000.

In some embodiments, in the case where the first device receives the AI information by using the transmission resource configuration sent by the second device, the transmission resource configuration includes at least one of the above configurations (1) to (11).

In some embodiments, in the case where the first device sends the AI information by using the transmission resource configuration sent by the second device, the transmission resource configuration may include at least one of the above configurations (1) to (11).

In some embodiments, the AI information includes at least one of: model identity information; model description information; or model algorithm data information.

The model identity information is used for identifying the AI model.

The model description information is used for describing a basic feature of the AI model. The description information of the AI model includes at least one of: a functional characteristic associated with the AI model, type information of an input parameter required for the AI model, format-requirement information of the input parameter required for the AI model, a pre-processing rule of the input parameter required for the AI model, type information of an output parameter required for the AI model, format-requirement information of the output parameter required for the AI model, a pre-processing rule of the output parameter required for the AI model, application-scenario information of the AI model, deployment-location information of the AI model, a capability requirement for application of an AI model algorithm, performance-monitoring-indicator information of the AI model algorithm, home-location information of the AI model algorithm, effective-application-range information of the AI model algorithm, generalization-characteristic information of the AI model algorithm, version information of AI model algorithm data, accuracy-level information of the AI model algorithm, or compilation or storage-format information of the AI model algorithm data.

The model algorithm data information is data information of the AI model itself, which includes at least one of: a structure data parameter or a weight parameter of an algorithm used for the AI model.

In some embodiments, in order for the first device (i.e., a receiving end) to understand or parse the AI information, the first device needs to know format information associated with the AI information. The format information associated with the AI information is used for the first device to distinguish and understand or parse the AI information, which includes at least one of: location boundary information of each information field in the AI information; information of the number of bits occupied by each information field in the AI information; information of the number of data packets contained in each information field in the AI information; or a data-parsing algorithm or rule of each information field in the AI information.

Exemplarily, the AI information includes the model description information and the model algorithm data information. The first device needs to know location boundary information of the model description information and the model algorithm data information in the whole AI information and information of the number of bits occupied by each of the model description information and the model algorithm data information in the whole AI information, or information of the number of AI information data packets occupied by each of the model description information and the model algorithm data information in the whole AI information, to completely distinguish and separately understand the model description information and the model algorithm data.

The format information associated with the AI information is configured for the first device in at least one of the following manners: pre-definition in a communication protocol; pre-configuration by a network device; default setting; dedicated signaling; or system broadcast message.

As above mentioned, according to the method provided in this embodiment, the first device transmits AI information by using a transmission resource configuration sent by the second device, where the AI information is information related to an AI/ML model, thereby realizing a bidirectional sharing mechanism of the AI information. In other words, the first device can not only receive the AI information from the second device, but also send the AI information to the second device, thereby expanding a manner for obtaining the AI information.

### For an embodiment in which a first device receives AI information

FIG. 4 is a flowchart of an information transmission method provided in an exemplary embodiment of the disclosure. The method is performed by a first device. The method includes the following.

At 410, the first device receives AI information by using a transmission resource configuration sent by a second device.

The first device includes at least one first functional entity. The first functional entity performs at least one of the following AI information transmission processing functions: (1) reassembling at least one AI information data packet delivered by a lower protocol layer or another protocol layer or another functional entity in the same protocol layer; (2) associating the reassembled AI information with model identity information, where the model identity information is used for identifying an AI/ML model associated with the AI information; (3) delivering the reassembled AI information to a second functional entity; (4) discarding an AI information data packet that is unable to be reassembled; or (5) generating a first message, where the first message is used for notifying the second device that the AI information is successfully reassembled or is not successfully reassembled.

### For (1):

Implementation 1: the at least one AI information data packet is delivered by the lower protocol layer to the first functional entity.

The first functional entity is contained in a first protocol layer or a second protocol layer.

In this manner, the first functional entity is part of protocol stack functions. The first protocol layer is any one of a media access control (MAC) layer, a backhaul adaptation protocol (BAP) layer, a radio link control (RLC) layer, a packet data convergence protocol (PDCP) layer, a radio resource control (RRC) layer, a service data adaptation protocol (SDAP) layer, an NAS, an application layer, and a positioning function protocol layer.

The second protocol layer is a new protocol layer other than the MAC layer, the BAP layer, the RLC layer, the PDCP layer, the RRC layer, the SDAP layer, the NAS, the application layer, and the positioning function protocol layer. The protocol layer contains the first functional entity, and the protocol layer is at any location above a physical (PHY) layer of a protocol stack, for example, between the PDCP layer and the SDAP layer or between the PDCP layer and the NAS or the like, which will not be listed.

Implementation 2: the at least one AI information data packet is delivered by the another protocol layer to the first functional entity.

The first functional entity is not part of protocol layer functions, or the first functional entity is a non-protocol-layer functional entity. In this manner, the first functional entity is not part of protocol stack functions, but information exchange exists between the first functional entity and a protocol layer in the protocol stack. If a new protocol layer is defined for a future communication system, the first functional entity may also exchange the at least one AI information data packet with the future-defined protocol layer, which is not limited in the disclosure.

Implementation 3: the at least one AI information data packet is delivered by the another functional entity in the same protocol layer to the first functional entity.

The first functional entity is contained in a first protocol layer or a second protocol layer.

The first protocol layer is any one of an MAC layer, a BAP layer, an RLC layer, a PDCP layer, an RRC layer, an SDAP layer, an NAS, an application layer, and a positioning function protocol layer.

The second protocol layer is a new protocol layer other than the MAC layer, the BAP layer, the RLC layer, the PDCP layer, the RRC layer, the SDAP layer, the NAS, the application layer, and the positioning function protocol layer.

In this manner, the first functional entity is part of protocol stack functions, and a protocol layer containing the first functional entity further contains another functional entity or module. The another functional entity or module can process or handle the AI information data packet. For example, the MAC layer contains a retransmission functional entity which can process the AI information data packet.

The lower protocol layer or the same protocol layer or the another protocol layer is any one of a PHY layer, an MAC layer, a BAP layer, an RLC layer, a PDCP layer, an RRC layer, an SDAP layer, an NAS, an application layer, and a positioning function protocol layer. Alternatively, the lower protocol layer or the same protocol layer or the another protocol layer is a new protocol layer other than the PHY layer, the MAC layer, the BAP layer, the RLC layer, the PDCP layer, the RRC layer, the SDAP layer, the NAS, the application layer, and the positioning function protocol layer.

The AI information generally contains a large amount of information. Before transmission of the AI information, information splitting is needed. In particular, the complete AI information is split into several data packets, and then sub-packet transmission is performed, where each data packet is referred to as the AI information data packet.

Any one of the at least one AI information data packet at least includes a data packet number information field and an AI information data field. The AI information data field contains all or part of the AI information. All or part of the at least one AI information data packet is obtained through information splitting of the AI information. The data packet number information field carries number information of the AI information data packet, and the AI information data field carries AI information data. The first device (i.e., a receiving end) needs to reassemble these AI information data packets according to the data packet number information field included in each AI information data packet, so as to recover the complete AI information.

In some embodiments, any one of the at least one AI information data packet further includes at least one of a model identity information field, a model description information field, a data packet importance-level indication information field, or a data packet QoS indication information field. The model identity information field carries model identity information, the model description information field carries model description information, the data packet importance-level indication information field carries data packet importance-level indication information, and the data packet QoS indication information field carries data packet QoS indication information.

In some embodiments, the at least one AI information data packet includes: an AI information data packet indicating start of transmission of the AI information and/or an AI information data packet indicating end of transmission of the AI information. The two AI information data packets may carry part of data of the AI information, or the two AI information data packets may not carry any data of the AI information, and only indicate the start and end of transmission of the AI information.

The AI information data packet indicating the start of transmission of the AI information and the AI information data packet indicating the end of transmission of the AI information are configured according to the granularity of the model identity or the granularity of the session identity or the granularity of the RB identity, and are configured for the first device in at least one of the following manners: pre-definition in a communication protocol; pre-configuration by a network device; default setting; dedicated signaling; or system broadcast message.

For (2), in some embodiments, the AI information is in one-to-one association with or in many-to-one association with the model identity information. That is, one set of AI information or multiple sets of AI information are associated with the same model identity. When the multiple sets of AI information are associated with the same model identity, the multiple sets of AI information are associated with similar functions, and may only differ slightly in the model generalization or model accuracy or model version.

Associating the reassembled AI information with the model identity information facilitates subsequent management operations based on the model identity, for example, operations such as model activation, model deactivation, model switching, model updating, and model deletion based on the model identity.

For (3), in some embodiments, a functional entity (the first functional entity) that completes the reassembly of the AI information in the first device may be different from a functional entity (the second functional entity) that actually stores or uses the AI information. Therefore, the first functional entity needs to deliver the reassembled AI information to the second functional entity. The second functional entity is contained in a third protocol layer, or the second functional entity is a non-protocol-layer functional entity. The third protocol layer is any one of a PHY layer, an MAC layer, a BAP layer, an RLC layer, a PDCP layer, an RRC layer, an SDAP layer, an NAS, an application layer, and a positioning function protocol layer. Alternatively, the third protocol layer is a new protocol layer other than the PHY layer, the MAC layer, the BAP layer, the RLC layer, the PDCP layer, the RRC layer, the SDAP layer, the NAS, the application layer, and the positioning function protocol layer.

The non-protocol-layer functional entity indicates that the second functional entity is not part of protocol stack functions and is a special functional module independent of the protocol stack, for example, a functional module dedicated for storing and managing the AI information, or referred to as an AI/ML functional entity.

In some embodiments, the first functional entity can route or deliver the AI information to the second functional entity based on at least one of: the AI information; model identity information associated with the AI information; or destination identity information associated with the AI information.

The model identity information associated with the AI information and/or the destination identity information associated with the AI information are configured for the first device in at least one of the following manners: pre-definition in a communication protocol; pre-configuration by a network device; default setting; dedicated signaling; or system broadcast message.

For (4), in some embodiments, due to constraints such as QoS requirements for data transmission, the first functional entity needs to take a model reassembly timer into consideration during the reassembly of the AI information data packet. The first functional entity discards, based on the model reassembly timer, the AI information data packet that is unable to be reassembled. The model reassembly timer is associated with the data packet reassembly of the first functional entity.

In some embodiments, when the model reassembly timer expires, the first functional entity discards all AI information data packets or an AI information data packet that has not been reassembled.

According to different detail requirements, there may be the following implementations for the model reassembly timer.

Implementation 1: in the case where the first functional entity receives a first one of the at least one AI information data packet associated with the AI information, the first functional entity starts the model reassembly timer. During running of the model reassembly timer, in the case where the first functional entity completes the reassembly of the AI information data packet, the first functional entity stops the running model reassembly timer. When the module reassembly timer expires, in the case where the first functional entity has not yet completed the reassembly of the AI information data packet, the first functional entity discards all received AI information data packets or discards an AI information data packet that has not been reassembled.

Implementation 2: in the case where the first functional entity receives an AI information data packet with number 0 or number 1 or a minimum number associated with the AI information, the first functional entity starts the model reassembly timer. During running of the model reassembly timer, in the case where the first functional entity completes the reassembly of the AI information data packet, the first functional entity stops the running model reassembly timer. When the module reassembly timer expires, in the case where the first functional entity has not yet completed the reassembly of the AI information data packet, the first functional entity discards all received AI information data packets or discards an AI information data packet that has not been reassembled.

Implementation 3: in the case where the first functional entity receives the last AI information data packet or an AI information data packet with a maximum number associated with the AI information, the first functional entity starts the model reassembly timer. During running of the model reassembly timer, in the case where the first functional entity completes the reassembly of the AI information data packet, the first functional entity stops the running model reassembly timer. When the module reassembly timer expires, in the case where the first functional entity has not yet completed the reassembly of the AI information data packet, the first functional entity discards all received AI information data packets or discards an AI information data packet that has not been reassembled.

Implementation 4: when a silence timer expires, the first functional entity starts the model reassembly timer. The silence timer is restarted in the case where an AI information data packet is received within a timing period, and expires in the case where no AI information data packet is received within the timing period.

The first functional entity starts or restarts the silence timer every time one AI information data packet is received by the first functional entity. During running of the silence timer, in the case where a new AI information data packet is received by the first functional entity, the silence timer is restarted. When the silence timer expires, in the case where no new AI information data packet is received by the first functional entity, the model reassembly timer is started.

During running of the model reassembly timer, in the case where the first functional entity completes the reassembly of the AI information data packet, the first functional entity stops the running model reassembly timer. When the module reassembly timer expires, in the case where the first functional entity has not yet completed the reassembly of the AI information data packet, the first functional entity discards all received AI information data packets or discards an AI information data packet that has not been reassembled.

The above model reassembly timer and/or silence timer is configured for the first device in at least one of the following manners: pre-definition in a communication protocol; pre-configuration by a network device; default setting; dedicated signaling; or system broadcast message.

For (5), in some embodiments, the first functional entity is responsible for generating the first message, and the generated first message is ultimately delivered to an underlying protocol layer for transmission.

In some embodiments, for (1) to (5) above, the at least one of the AI information transmission processing functions is performed by the same first functional entity or each performed by a different first functional entity, or at least two of the AI information transmission processing functions are performed by different first functional entities.

In some embodiments, the first functional entity is configured according to the granularity of the session identity or the granularity of the model identity information or the granularity of the RB identity.

Configured according to the granularity of the session identity: the same set of AI information is transmitted on one or more session resources, each session identity is associated with one or more RB resources, and all RB resources associated with the same session identity are associated with the same first functional entity.

Configured according to the granularity of the model identity information: the same set of AI information is associated with the same model identity information and is transmitted on one or more RB resources, and all RB resources associated with each model identity information are associated with the same first functional entity.

Configured according to the granularity of the RB identity: the same set of AI information is transmitted on one or more RB resources, and one RB resource or a group of RB resources associated with each set of AI information is associated with the same first functional entity.

In some embodiments, the first device receives configuration information from the second device. The configuration information is used for configuring or indicates the transmission resource configuration.

In some embodiments, the first device sends response information to the second device. The response information is used for confirming that the configuration information is successfully received.

FIG. 5 is a flowchart of an information transmission method provided in an exemplary embodiment of the disclosure. The method is performed by a first device 510. The method includes the following.

At 501, the first device 510 receives configuration information from a second device 520.

The configuration information is used for configuring or indicates a transmission resource configuration.

At 502, optionally, the first device 510 sends response information to the second device 520.

The response information is used for confirming that the configuration information is successfully received by the first device 510.

At 503, the first device 510 receives AI information by using a transmission resource configuration sent by the second device 520.

For specific implementation details of operations at 503, reference can be made to operations at 410, which will not be repeated herein.

As above mentioned, according to the method provided in this embodiment, the first device receives AI information by using a transmission resource configuration sent by the second device, thereby expanding a manner for obtaining the AI information.

Further, according to the method provided in this embodiment, all RB resources associated with the same session identity are associated with the same first functional entity, or all RB resources associated with each model identity information are associated with the same first functional entity, or one RB resource or a group of RB resources associated with each set of AI information is associated with the same first functional entity, thereby expanding a type of data that an RB can bear and process.

For an embodiment in which a first device sends AI information

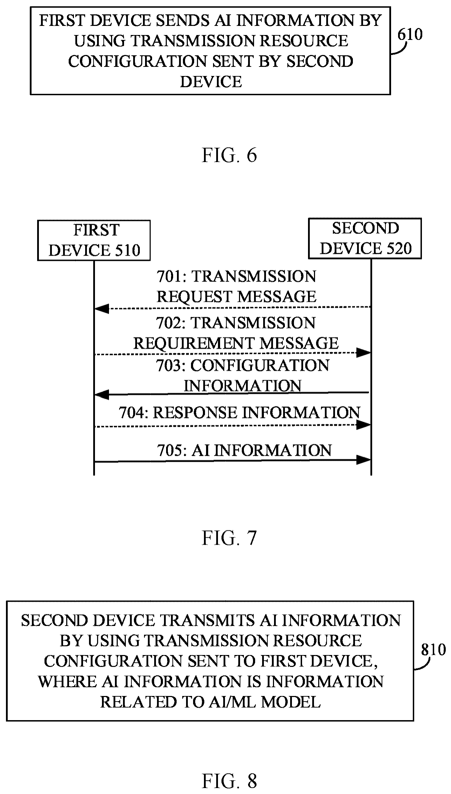

FIG. 6 is a flowchart of an information transmission method provided in an exemplary embodiment of the disclosure. The method is performed by a first device. The method includes the following.

At 610, the first device sends AI information by using a transmission resource configuration sent by a second device.

The first device includes at least one third functional entity. The third functional entity performs at least one of the following AI information transmission processing functions: (1) receiving the AI information delivered by a fourth functional entity; (2) splitting the AI information into at least one AI information data packet; (3) associating each of the at least one AI information data packet with QoS parameter information; (4) associating each of the at least one AI information data packet with importance-level indication information; (5) delivering at least one processed AI information data packet to a lower protocol layer or another protocol layer or another functional entity in the same protocol layer; or (6) receiving a second message, where the second message is used for notifying the first device that the AI information is successfully reassembled or is not successfully reassembled.

For (1), in some embodiments, a functional entity (the third functional entity) that processes or handles the AI information in the first device (i.e., a sending end) may be different from a functional entity (the fourth functional entity) that actually stores or uses the AI information. Therefore, the fourth functional entity needs to deliver the AI information to the third functional entity, for processing or handling before data transmission.

For (2), in some embodiments, the complete AI information is split into the at least one AI information data packet, and any one of the at least one AI information data packet at least includes a data packet number information field and an AI information data field. The AI information data field contains all or part of the AI information. The data packet number information field and the AI information data field each occupy at least one bit. The data packet number information field carries number information of the AI information data packet, and the AI information data field carries AI information data.

In some embodiments, any one of the at least one AI information data packet further includes at least one of a model identity information field, a model description information field, a data packet importance-level indication information field, or a data packet QoS indication information field. The model identity information field carries model identity information, the model description information field carries model description information, the data packet importance-level indication information field carries data packet importance-level indication information, and the data packet QoS indication information field carries data packet QoS indication information.

In some embodiments, the at least one AI information data packet includes: an AI information data packet indicating start of transmission of the AI information and/or an AI information data packet indicating end of transmission of the AI information. The two AI information data packets may carry part of data of the AI information, or the two AI information data packets may not carry any data of the AI information, and only indicate the start and end of transmission of the AI information.

The AI information data packet indicating the start of transmission of the AI information and the AI information data packet indicating the end of transmission of the AI information are configured according to the granularity of the model identity or the granularity of the session identity or the granularity of the RB identity, and are configured for the first device in at least one of the following manners: pre-definition in a communication protocol; pre-configuration by a network device; default setting; dedicated signaling; or system broadcast message.

For (3) and (4), (3) and (4) have similar functions. Different portions of the AI information correspond to different importance degrees of information. Exemplarily, an importance degree of an AI model structure parameter is high, and a small amount of erroneous transmission will have great influence on the AI model performance. An importance degree of an AI model weight parameter is low, and a small amount of erroneous transmission will have little influence on the AI model performance. Therefore, different transmission strategies may be adopted for different portions of the AI information in a communication system. For example, for an AI information data packet including the AI model structure parameter, such AI information data is associated with higher QoS parameter information or higher importance-level indication information. For an AI information data packet including the AI model weight parameter, such AI information data packet is associated with lower QoS parameter information or lower importance-level indication information. There may be the following two implementations for this association.

Implementation 1: each AI information data packet includes not only the data packet number information field and the AI information data field, but also a QoS parameter indication field or an importance-level indication field. That is, QoS parameter information or importance-level indication information associated with each AI information data packet can be delivered to the first device as part of the AI information data packet.

Implementation 2: QoS parameter information or importance-level indication information associated with the AI information data packet is not part of the AI information data packet, and is configured for the first device in at least one of the following manners: pre-definition in a communication protocol; pre-configuration by a network device; default setting; dedicated signaling; or system broadcast message.

For (5), in some embodiments, the third functional entity delivers the processed AI information data packet to the lower protocol layer. The third functional entity is contained in a fourth protocol layer or a fifth protocol layer. The fourth protocol layer is any one of an MAC layer, a BAP layer, an RLC layer, a PDCP layer, an RRC layer, an SDAP layer, an NAS, an application layer, and a positioning function protocol layer. The fifth protocol layer is a new protocol layer other than the MAC layer, the BAP layer, the RLC layer, the PDCP layer, the RRC layer, the SDAP layer, the NAS, the application layer, and the positioning function protocol layer. The protocol layer contains the third functional entity, and the protocol layer is at any location above a PHY layer of a protocol stack, for example, between the PDCP layer and the SDAP layer or between the PDCP layer and the NAS or the like, which will not be listed in the disclosure.

In some embodiments, the third functional entity delivers the processed AI information data packet to the another protocol layer. The third functional entity is not part of protocol layer functions, or the third functional entity is a non-protocol-layer functional entity. In this manner, the third functional entity is not part of protocol stack functions, but information exchange exists between the third functional entity and a protocol layer in the protocol stack. If a new protocol layer is defined for a future communication system, the third functional entity may also exchange the at least one AI information data packet with the future-defined protocol layer, which is not limited in the disclosure.

In some embodiments, the at least one AI information data packet is delivered by the another functional entity in the same protocol layer to the third functional entity. The third functional entity is contained in a fourth protocol layer or a fifth protocol layer. The fourth protocol layer is any one of an MAC layer, a BAP layer, an RLC layer, a PDCP layer, an RRC layer, an SDAP layer, an NAS, an application layer, and a positioning function protocol layer. The fifth protocol layer is a new protocol layer other than the MAC layer, the BAP layer, the RLC layer, the PDCP layer, the RRC layer, the SDAP layer, the NAS, the application layer, and the positioning function protocol layer.

In this manner, the third functional entity is part of protocol stack functions, and a protocol layer containing the third functional entity further contains another functional entity or module. The another functional entity or module can process or handle the AI information data packet. For example, the MAC layer contains a retransmission functional entity which can process the AI information data packet.

The lower protocol layer or the same protocol layer or the another protocol layer is any one of a PHY layer, an MAC layer, a BAP layer, an RLC layer, a PDCP layer, an RRC layer, an SDAP layer, an NAS, an application layer, and a positioning function protocol layer. Alternatively, the lower protocol layer or the same protocol layer or the another protocol layer is a new protocol layer other than the PHY layer, the MAC layer, the BAP layer, the RLC layer, the PDCP layer, the RRC layer, the SDAP layer, the NAS, the application layer, and the positioning function protocol layer.

In some embodiments, the fourth functional entity is contained in a sixth protocol layer, or the fourth functional entity is a non-protocol-layer functional entity. The sixth protocol layer is any one of a PHY layer, an MAC layer, a BAP layer, an RLC layer, a PDCP layer, an RRC layer, an SDAP layer, an NAS, an application layer, and a positioning function protocol layer. Alternatively, the sixth protocol layer is a new protocol layer other than the PHY layer, the MAC layer, the BAP layer, the RLC layer, the PDCP layer, the RRC layer, the SDAP layer, the NAS, the application layer, and the positioning function protocol layer.

For (6), in some embodiments, an underlying protocol layer of the first device receives the second message, and the second message is ultimately delivered to the third functional entity for processing.

In some embodiments, for (1) to (6) above, the at least one of the AI information transmission processing functions is performed by the same third functional entity or each performed by a different third functional entity, or at least two of the AI information transmission processing functions are performed by different third functional entities.

In some embodiments, the third functional entity is configured according to the granularity of the session identity or the granularity of the model identity information or the granularity of the RB identity.

Configured according to the granularity of the session identity: the same set of AI information is transmitted on one or more session resources, each session identity is associated with one or more RB resources, and all RB resources associated with the same session identity are associated with the same third functional entity.

Configured according to the granularity of the model identity information: the same set of AI information is associated with the same model identity information and is transmitted on one or more RB resources, and all RB resources associated with each model identity information are associated with the same third functional entity.

Configured according to the granularity of the RB identity: in some embodiments, the same set of AI information is transmitted on one or more RB resources, and one RB resource or a group of RB resources associated with each set of AI information is associated with the same third functional entity.

In some embodiments, the first device receives a transmission request message from the second device. The transmission request message indicates the first device to upload to the second device at least one set of AI information, including at least one model identity information associated with the AI information and/or model description information associated with the AI information that the second device expects the first device to transmit.

In some embodiments, the first device sends a transmission requirement message to the second device. The transmission requirement message indicates at least one set of AI information to be uploaded by the first device, including at least one model identity information associated with the AI information and/or model description information associated with the AI information that can be transmitted.

In some embodiments, the first device receives configuration information from the second device. The configuration information is used for configuring or indicates the transmission resource configuration.

In some embodiments, the first device sends response information to the second device. The response information is used for confirming that the configuration information is successfully received.

FIG. 7 is a flowchart of an information transmission method provided in an exemplary embodiment of the disclosure. The method is performed by a first device 510. The method includes the following.

At 701, optionally, the first device 510 receives a transmission request message from a second device 520.

The transmission request message indicates the first device 510 to upload to the second device 520 at least one set of AI information, including at least one model identity information associated with the AI information and/or model description information associated with the AI information that the second device 520 expects the first device 510 to transmit.

At 702, optionally, the first device 510 sends a transmission requirement message to the second device 520.

The transmission requirement message indicates at least one set of AI information to be uploaded by the first device 510, including at least one model identity information associated with the AI information and/or model description information associated with the AI information that can be transmitted.

At 703, the first device 510 receives configuration information from the second device 520.

The configuration information is used for configuring or indicates a transmission resource configuration.

At 704, optionally, the first device 510 sends response information to the second device 520.

The response information is used for confirming that the configuration information is successfully received by the first device 510.

At 705, the first device 510 sends the AI information by using the transmission resource configuration sent by the second device 520.

For specific implementation details of operations at 705, reference can be made to operations at 610, which will not be repeated herein.

As above mentioned, according to the method provided in this embodiment, the first device sends AI information by using a transmission resource configuration sent by the second device, thereby expanding a manner for obtaining the AI information.

Further, according to the method provided in this embodiment, all RB resources associated with the same session identity are associated with the same third functional entity, or all RB resources associated with each model identity information are associated with the same third functional entity, or one RB resource or a group of RB resources associated with each set of AI information is associated with the same third functional entity, thereby expanding a type of data that an RB can bear and process.

For an embodiment in which a second device transmits AI information

FIG. 8 is a flowchart of an information transmission method provided in an exemplary embodiment of the disclosure. The method is performed by a second device. The method includes the following.

At 810, the second device transmits AI information by using a transmission resource configuration sent to a first device, where the AI information is information related to an AI/ML model.

The second device transmits the AI information by using the transmission resource configuration sent to the first device as follows. The second device sends the AI information to the first device by using the transmission resource configuration sent to the first device, and/or the second device receives the AI information from the first device by using the transmission resource configuration sent to the first device.

The transmission resource configuration indicates a transmission resource configured for transmission of the AI information, and includes at least one of: at least one RB identity information; model identity information associated with the AI information; session identity information associated with the AI information; number information associated with the last AI information data packet corresponding to the AI information; information of the total number of AI information data packets corresponding to the AI information; data importance-level indication information associated with the AI information; data QoS parameter information associated with the AI information; model description information associated with the AI information; a related configuration of a first functional entity; destination identity information associated with the AI information; or number information associated with the first AI information data packet corresponding to the AI information.

For specific implementation details of the above method, reference can be made to operations at 310 at a first device side, which will not be repeated herein.

For an embodiment in which a second device sends AI information

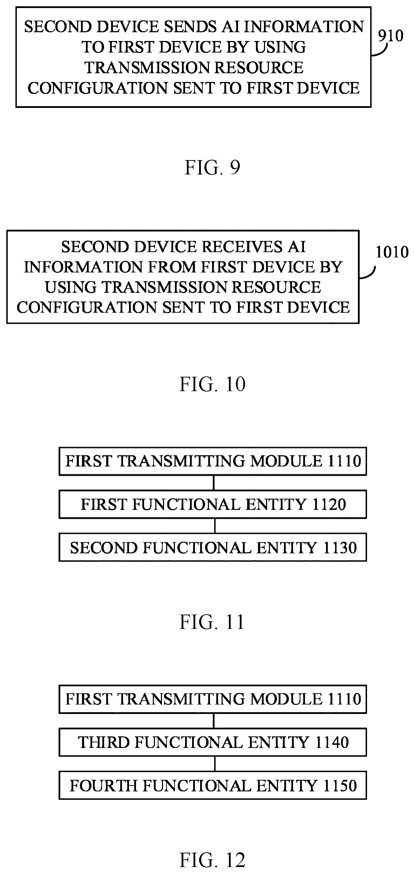

FIG. 9 is a flowchart of an information transmission method provided in an exemplary embodiment of the disclosure. The method is performed by a second device. The method includes the following.

At 910, the second device sends AI information to a first device by using a transmission resource configuration sent to the first device.

The second device includes at least one third functional entity. The third functional entity performs at least one of the following AI information transmission processing functions: (1) receiving the AI information delivered by a fourth functional entity; (2) splitting the AI information into at least one AI information data packet; (3) associating each of the at least one AI information data packet with QoS parameter information; (4) associating each of the at least one AI information data packet with importance-level indication information; (5) delivering at least one processed AI information data packet to a lower protocol layer or another protocol layer or another functional entity in the same protocol layer; or (6) receiving a first message, where the first message is used for notifying the second device that the AI information is successfully reassembled or is not successfully reassembled.

In some embodiments, the third functional entity delivers the processed AI information data packet to the lower protocol layer. The third functional entity is contained in a fourth protocol layer or a fifth protocol layer. The fourth protocol layer is any one of an MAC layer, a BAP layer, an RLC layer, a PDCP layer, an RRC layer, an SDAP layer, an NAS, an application layer, and a positioning function protocol layer. The fifth protocol layer is a new protocol layer other than the MAC layer, the BAP layer, the RLC layer, the PDCP layer, the RRC layer, the SDAP layer, the NAS, the application layer, and the positioning function protocol layer.

In some embodiments, the third functional entity delivers the processed AI information data packet to the another protocol layer. The third functional entity is not part of protocol layer functions, or the third functional entity is a non-protocol-layer functional entity.

In some embodiments, the third functional entity delivers the processed AI information data packet to the another functional entity in the same protocol layer. The third functional entity is contained in a fourth protocol layer or a fifth protocol layer. The fourth protocol layer is any one of an MAC layer, a BAP layer, an RLC layer, a PDCP layer, an RRC layer, an SDAP layer, an NAS, an application layer, and a positioning function protocol layer. The fifth protocol layer is a new protocol layer other than the MAC layer, the BAP layer, the RLC layer, the PDCP layer, the RRC layer, the SDAP layer, the NAS, the application layer, and the positioning function protocol layer.

The lower protocol layer or the same protocol layer or the another protocol layer is any one of a PHY layer, an MAC layer, a BAP layer, an RLC layer, a PDCP layer, an RRC layer, an SDAP layer, an NAS, an application layer, and a positioning function protocol layer. Alternatively, the lower protocol layer or the same protocol layer or the another protocol layer is a new protocol layer other than the PHY layer, the MAC layer, the BAP layer, the RLC layer, the PDCP layer, the RRC layer, the SDAP layer, the NAS, the application layer, and the positioning function protocol layer.

In some embodiments, any one of the at least one AI information data packet at least includes a data packet number information field and an AI information data field. The AI information data field contains all or part of the AI information.

In some embodiments, any one of the at least one AI information data packet further includes at least one of a model identity information field, a model description information field, a data packet importance-level indication information field, or a data packet QoS indication information field.

In some embodiments, the at least one AI information data packet includes: an AI information data packet indicating start of transmission of the AI information and/or an AI information data packet indicating end of transmission of the AI information.

In some embodiments, the fourth functional entity is contained in a sixth protocol layer, or the fourth functional entity is a non-protocol-layer functional entity. The sixth protocol layer is any one of a PHY layer, an MAC layer, a BAP layer, an RLC layer, a PDCP layer, an RRC layer, an SDAP layer, an NAS, an application layer, and a positioning function protocol layer. Alternatively, the sixth protocol layer is a new protocol layer other than the PHY layer, the MAC layer, the BAP layer, the RLC layer, the PDCP layer, the RRC layer, the SDAP layer, the NAS, the application layer, and the positioning function protocol layer.

In some embodiments, the at least one of the AI information transmission processing functions is performed by the same third functional entity or each performed by a different third functional entity, or at least two of the AI information transmission processing functions are performed by different third functional entities.

In some embodiments, the third functional entity is configured according to the granularity of the session identity or the granularity of the model identity information or the granularity of the RB identity.

Configured according to the granularity of the session identity: the same set of AI information is transmitted on one or more session resources, each session identity is associated with one or more RB resources, and all RB resources associated with the same session identity are associated with the same third functional entity.

Configured according to the granularity of the model identity information: the same set of AI information is associated with the same model identity information and is transmitted on one or more RB resources, and all RB resources associated with each model identity information are associated with the same third functional entity.

Configured according to the granularity of the RB identity: in some embodiments, the same set of AI information is transmitted on one or more RB resources, and one RB resource or a group of RB resources associated with each set of AI information is associated with the same third functional entity.

In some embodiments, the second device sends configuration information to the first device. The configuration information is used for configuring or indicates the transmission resource configuration.

In some embodiments, the second device receives response information from the first device. The response information is used for confirming that the configuration information is successfully received.

For specific implementation details of the above method, reference can be made to operations at 610 at a first device side, which will not be repeated herein.

For an embodiment in which a second device receives AI information

FIG. 10 is a flowchart of an information transmission method provided in an exemplary embodiment of the disclosure. The method is performed by a second device. The method includes the following.

At 1010, the second device receives AI information from a first device by using a transmission resource configuration sent to the first device.

The second device includes at least one first functional entity. The first functional entity performs at least one of the following AI information transmission processing functions: (1) reassembling at least one AI information data packet delivered by a lower protocol layer or another protocol layer or another functional entity in the same protocol layer; (2) associating the reassembled AI information with model identity information, where the model identity information is used for identifying an AI/ML model associated with the AI information; (3) delivering the reassembled AI information to a second functional entity; (4) discarding an AI information data packet that is unable to be reassembled; or (5) generating a second message, where the second message is used for notifying the first device that the AI information is successfully reassembled or is not successfully reassembled.

In some embodiments, the at least one AI information data packet is delivered by the lower protocol layer to the first functional entity. The first functional entity is contained in a first protocol layer or a second protocol layer. The first protocol layer is any one of an MAC layer, a BAP layer, an RLC layer, a PDCP layer, an RRC layer, an SDAP layer, an NAS, an application layer, and a positioning function protocol layer. The second protocol layer is a new protocol layer other than the MAC layer, the BAP layer, the RLC layer, the PDCP layer, the RRC layer, the SDAP layer, the NAS, the application layer, and the positioning function protocol layer.

In some embodiments, the at least one AI information data packet is delivered by the another protocol layer to the first functional entity. The first functional entity is not part of protocol layer functions, or the first functional entity is a non-protocol-layer functional entity.

In some embodiments, the at least one AI information data packet is delivered by the another functional entity in the same protocol layer to the first functional entity. The first functional entity is contained in a first protocol layer or a second protocol layer. The first protocol layer is any one of an MAC layer, a BAP layer, an RLC layer, a PDCP layer, an RRC layer, an SDAP layer, an NAS, an application layer, and a positioning function protocol layer. The second protocol layer is a new protocol layer other than the MAC layer, the BAP layer, the RLC layer, the PDCP layer, the RRC layer, the SDAP layer, the NAS, the application layer, and the positioning function protocol layer.

In some embodiments, the second functional entity is contained in a third protocol layer, or the second functional entity is a non-protocol-layer functional entity. The third protocol layer is any one of a PHY layer, an MAC layer, a BAP layer, an RLC layer, a PDCP layer, an RRC layer, an SDAP layer, an NAS, an application layer, and a positioning function protocol layer. Alternatively, the third protocol layer is a new protocol layer other than the PHY layer, the MAC layer, the BAP layer, the RLC layer, the PDCP layer, the RRC layer, the SDAP layer, the NAS, the application layer, and the positioning function protocol layer.

The lower protocol layer or the same protocol layer or the another protocol layer is any one of a PHY layer, an MAC layer, a BAP layer, an RLC layer, a PDCP layer, an RRC layer, an SDAP layer, an NAS, an application layer, and a positioning function protocol layer. Alternatively, the lower protocol layer or the same protocol layer or the another protocol layer is a new protocol layer other than the PHY layer, the MAC layer, the BAP layer, the RLC layer, the PDCP layer, the RRC layer, the SDAP layer, the NAS, the application layer, and the positioning function protocol layer.

In some embodiments, any one of the at least one AI information data packet at least includes a data packet number information field and an AI information data field. The AI information data field contains all or part of the AI information.

In some embodiments, any one of the at least one AI information data packet further includes at least one of a model identity information field, a model description information field, a data packet importance-level indication information field, or a data packet QoS indication information field.

In some embodiments, the at least one AI information data packet includes: an AI information data packet indicating start of transmission of the AI information and/or an AI information data packet indicating end of transmission of the AI information.

In some embodiments, the AI information is in one-to-one association with or in many-to-one association with the model identity information.

In some embodiments, the first functional entity routes or delivers the AI information to the second functional entity based on at least one of: the AI information; model identity information associated with the AI information; or destination identity information associated with the AI information.

In some embodiments, the first functional entity discards, based on a model reassembly timer, the AI information data packet that is unable to be reassembled. The model reassembly timer is associated with data packet reassembly of the first functional entity.

In some embodiments, when the model reassembly timer expires, the first functional entity discards all AI information data packets or an AI information data packet that has not been reassembled.

In some embodiments, in the case where the first functional entity receives the first AI information data packet associated with the AI information, the first functional entity starts the model reassembly timer. Alternatively, in the case where the first functional entity receives an AI information data packet with number 0 or number 1 or a minimum number associated with the AI information, the first functional entity starts the model reassembly timer. Alternatively, in the case where the first functional entity receives the last AI information data packet or an AI information data packet with a maximum number associated with the AI information, the first functional entity starts the model reassembly timer. Alternatively, when a silence timer expires, the first functional entity starts the model reassembly timer. The silence timer is restarted in the case where an AI information data packet is received within a timing period, and expires in the case where no AI information data packet is received within the timing period.

In some embodiments, the at least one of the AI information transmission processing functions is performed by the same first functional entity or each performed by a different first functional entity, or at least two of the AI information transmission processing functions are performed by different first functional entities.

In some embodiments, the first functional entity is configured according to the granularity of the session identity or the granularity of the model identity information or the granularity of the RB identity.

Configured according to the granularity of the session identity: the same set of AI information is transmitted on one or more session resources, each session identity is associated with one or more RB resources, and all RB resources associated with the same session identity are associated with the same first functional entity.

Configured according to the granularity of the model identity information: the same set of AI information is associated with the same model identity information and is transmitted on one or more RB resources, and all RB resources associated with each model identity information are associated with the same first functional entity.

Configured according to the granularity of the RB identity: in some embodiments, the same set of AI information is transmitted on one or more RB resources, and one RB resource or a group of RB resources associated with each set of AI information is associated with the same first functional entity.

In some embodiments, the second device sends configuration information to the first device. The configuration information is used for configuring or indicates the transmission resource configuration.

In some embodiments, the second device receives response information from the first device. The response information is used for confirming that the configuration information is successfully received.

For specific implementation details of the above method, reference can be made to operations at 410 at a first device side, which will not be repeated herein.

Any message involved in the above embodiments is a unicast message, a multicast message, or a broadcast message.

Unicast message (one-to-one): a source delivers the unicast message on a unicast channel, and only a terminal device for which a corresponding unicast resource is allocated can attempt to receive the unicast message. The unicast message may be also referred to as dedicated signaling.

Multicast message (one-to-many): a source delivers the multicast message on a multicast channel, and a terminal device which is in a coverage area of a multicast signal and is a member of a group can attempt to receive the multicast message. When a terminal device joins the group, the terminal device can obtain a resource related to the multicast channel.

Broadcast message (one-to-any): a source delivers the broadcast message on a broadcast channel, and any terminal device in a coverage area of a broadcast signal can attempt to receive the broadcast message.

In some embodiments, any message is at least one of the following message types: an NAS message, an RRC message, a media access control control-element (MAC CE) message, a downlink control information (DCI) message, an uplink control information (UCI) message, a physical uplink shared channel (PUSCH) message, an inter-node message, an Xn message, an F1 message, an E1 message, an NG message, a core-network bus message.

FIG. 11 is a block diagram of an information transmission apparatus provided in an exemplary embodiment of the disclosure. The apparatus includes a first transmitting module 1110. The first transmitting module 1110 is configured to transmit AI information by using a transmission resource configuration sent by a second device, where the AI information is information related to an AI/ML model.

In a possible design of this embodiment, the first transmitting module 1110 is configured to receive the AI information by using the transmission resource configuration sent by the second device.

In a possible design of this embodiment, the apparatus further includes a first functional entity 1120 and a second functional entity 1130. The first functional entity 1120 is configured to perform at least one of the following AI information transmission processing functions: reassembling at least one AI information data packet delivered by a lower protocol layer or another protocol layer or another functional entity in the same protocol layer; associating the reassembled AI information with model identity information, where the model identity information is used for identifying an AI/ML model associated with the AI information; delivering the reassembled AI information to the second functional entity 1130; discarding an AI information data packet that is unable to be reassembled; or generating a first message, where the first message is used for notifying the second device that the AI information is successfully reassembled or is not successfully reassembled.

In a possible design of this embodiment, the at least one AI information data packet is delivered by the lower protocol layer to the first functional entity 1120. The first functional entity 1120 is contained in a first protocol layer or a second protocol layer. The first protocol layer is any one of an MAC layer, a BAP layer, an RLC layer, a PDCP layer, an RRC layer, an SDAP layer, an NAS, an application layer, and a positioning function protocol layer. The second protocol layer is a new protocol layer other than the MAC layer, the BAP layer, the RLC layer, the PDCP layer, the RRC layer, the SDAP layer, the NAS, the application layer, and the positioning function protocol layer.

In a possible design of this embodiment, the at least one AI information data packet is delivered by the another protocol layer to the first functional entity 1120. The first functional entity 1120 is not part of protocol layer functions, or the first functional entity 1120 is a non-protocol-layer functional entity.

In a possible design of this embodiment, the at least one AI information data packet is delivered by the another functional entity in the same protocol layer to the first functional entity 1120. The first functional entity 1120 is contained in a first protocol layer or a second protocol layer. The first protocol layer is any one of an MAC layer, a BAP layer, an RLC layer, a PDCP layer, an RRC layer, an SDAP layer, an NAS, an application layer, and a positioning function protocol layer. The second protocol layer is a new protocol layer other than the MAC layer, the BAP layer, the RLC layer, the PDCP layer, the RRC layer, the SDAP layer, the NAS, the application layer, and the positioning function protocol layer.

In a possible design of this embodiment, the lower protocol layer or the same protocol layer or the another protocol layer is any one of a PHY layer, an MAC layer, a BAP layer, an RLC layer, a PDCP layer, an RRC layer, an SDAP layer, an NAS, an application layer, and a positioning function protocol layer. Alternatively, the lower protocol layer or the same protocol layer or the another protocol layer is a new protocol layer other than the PHY layer, the MAC layer, the BAP layer, the RLC layer, the PDCP layer, the RRC layer, the SDAP layer, the NAS, the application layer, and the positioning function protocol layer.

In a possible design of this embodiment, any one of the at least one AI information data packet at least includes a data packet number information field and an AI information data field. The AI information data field contains all or part of the AI information.

In a possible design of this embodiment, any one of the at least one AI information data packet further includes at least one of a model identity information field, a model description information field, a data packet importance-level indication information field, or a data packet QoS indication information field.

In a possible design of this embodiment, the at least one AI information data packet includes: an AI information data packet indicating start of transmission of the AI information and/or an AI information data packet indicating end of transmission of the AI information.

In a possible design of this embodiment, the AI information is in one-to-one association with or in many-to-one association with the model identity information.

In a possible design of this embodiment, the second functional entity 1130 is contained in a third protocol layer, or the second functional entity 1130 is a non-protocol-layer functional entity. The third protocol layer is any one of a PHY layer, an MAC layer, a BAP layer, an RLC layer, a PDCP layer, an RRC layer, an SDAP layer, an NAS, an application layer, and a positioning function protocol layer. Alternatively, the third protocol layer is a new protocol layer other than the PHY layer, the MAC layer, the BAP layer, the RLC layer, the PDCP layer, the RRC layer, the SDAP layer, the NAS, the application layer, and the positioning function protocol layer.

In a possible design of this embodiment, the first functional entity 1120 is configured to route or deliver the AI information to the second functional entity 1130 based on at least one of: the AI information; model identity information associated with the AI information; or destination identity information associated with the AI information.

In a possible design of this embodiment, the first functional entity 1120 is configured to discard, based on a model reassembly timer, the AI information data packet that is unable to be reassembled. The model reassembly timer is associated with the data packet reassembly of the first functional entity 1120.

In a possible design of this embodiment, the first functional entity 1120 is configured to discard all AI information data packets or an AI information data packet that has not been reassembled, when the model reassembly timer expires.

In a possible design of this embodiment, the first functional entity 1120 is configured to start the model reassembly timer, in the case where the first functional entity 1120 receives the first AI information data packet associated with the AI information. Alternatively, the first functional entity 1120 is configured to start the model reassembly timer, in the case where the first functional entity 1120 receives an AI information data packet with number 0 or number 1 or a minimum number associated with the AI information. Alternatively, the first functional entity 1120 is configured to start the model reassembly timer, in the case where the first functional entity 1120 receives the last AI information data packet or an AI information data packet with a maximum number associated with the AI information. Alternatively, the first functional entity 1120 is configured to start the model reassembly timer, when a silence timer expires. The silence timer is restarted in the case where an AI information data packet is received within a timing period, and expires in the case where no AI information data packet is received within the timing period.

In a possible design of this embodiment, the at least one of the AI information transmission processing functions is performed by the same first functional entity 1120 or each performed by a different first functional entity 1120, or at least two of the AI information transmission processing functions are performed by different first functional entities 1120.

In a possible design of this embodiment, the same set of AI information is transmitted on one or more session resources, each session identity is associated with one or more RB resources, and all RB resources associated with the same session identity are associated with the same first functional entity 1120.

In a possible design of this embodiment, the same set of AI information is associated with the same model identity information and is transmitted on one or more RB resources, and all RB resources associated with each model identity information are associated with the same first functional entity 1120.

In a possible design of this embodiment, the same set of AI information is transmitted on one or more RB resources, and one RB resource or a group of RB resources associated with each set of AI information is associated with the same first functional entity 1120.

In a possible design of this embodiment, the first transmitting module 1110 is further configured to receive configuration information from the second device. The configuration information is used for configuring or indicates the transmission resource configuration.

In a possible design of this embodiment, the first transmitting module 1110 is further configured to send response information to the second device. The response information is used for confirming that the configuration information is successfully received.

In a possible design of this embodiment, the transmission resource configuration includes at least one of: at least one RB identity information; model identity information associated with the AI information; session identity information associated with the AI information; number information associated with the last AI information data packet corresponding to the AI information; information of the total number of AI information data packets corresponding to the AI information; data importance-level indication information associated with the AI information; data QoS parameter information associated with the AI information; model description information associated with the AI information; a related configuration of the first functional entity 1120; destination identity information associated with the AI information; or number information associated with the first AI information data packet corresponding to the AI information.

In a possible design of this embodiment, the AI information includes at least one of: model identity information; model description information; or model algorithm data information.

In a possible design of this embodiment, the first device and the second device satisfy one of the following. The first device is a terminal device, and the second device is a network device. Alternatively, the first device is the network device, and the second device is the terminal device. Alternatively, the first device and the second device each are the network device. Alternatively, the first device and the second device each are the terminal device.

FIG. 12 is a block diagram of an information transmission apparatus provided in an exemplary embodiment of the disclosure. The apparatus includes a first transmitting module 1110. The first transmitting module 1110 is configured to transmit AI information by using a transmission resource configuration sent by a second device, where the AI information is information related to an AI/ML model.

In a possible design of this embodiment, the first transmitting module 1110 is configured to send the AI information by using the transmission resource configuration sent by the second device.

In a possible design of this embodiment, the apparatus further includes a third functional entity 1140 and a fourth functional entity 1150. The third functional entity 1140 is configured to perform at least one of the following AI information transmission processing functions: receiving the AI information delivered by the fourth functional entity 1150; splitting the AI information into at least one AI information data packet; associating each of the at least one AI information data packet with QoS parameter information; associating each of the at least one AI information data packet with importance-level indication information; delivering at least one processed AI information data packet to a lower protocol layer or another protocol layer or another functional entity in the same protocol layer; or receiving a second message, where the second message is used for notifying the first device that the AI information is successfully reassembled or is not successfully reassembled.

In a possible design of this embodiment, the third functional entity 1140 is configured to deliver the processed AI information data packet to the lower protocol layer. The third functional entity 1140 is contained in a fourth protocol layer or a fifth protocol layer. The fourth protocol layer is any one of an MAC layer, a BAP layer, an RLC layer, a PDCP layer, an RRC layer, an SDAP layer, an NAS, an application layer, and a positioning function protocol layer. The fifth protocol layer is a new protocol layer other than the MAC layer, the BAP layer, the RLC layer, the PDCP layer, the RRC layer, the SDAP layer, the NAS, the application layer, and the positioning function protocol layer.

In a possible design of this embodiment, the third functional entity 1140 is configured to deliver the processed AI information data packet to the another protocol layer. The third functional entity 1140 is not part of protocol layer functions, or the third functional entity 1140 is a non-protocol-layer functional entity.

In a possible design of this embodiment, the third functional entity 1140 is configured to deliver the processed AI information data packet to the another functional entity in the same protocol layer. The third functional entity 1140 is contained in a fourth protocol layer or a fifth protocol layer. The fourth protocol layer is any one of an MAC layer, a BAP layer, an RLC layer, a PDCP layer, an RRC layer, an SDAP layer, an NAS, an application layer, and a positioning function protocol layer. The fifth protocol layer is a new protocol layer other than the MAC layer, the BAP layer, the RLC layer, the PDCP layer, the RRC layer, the SDAP layer, the NAS, the application layer, and the positioning function protocol layer.

In a possible design of this embodiment, the lower protocol layer or the same protocol layer or the another protocol layer is any one of a PHY layer, an MAC layer, a BAP layer, an RLC layer, a PDCP layer, an RRC layer, an SDAP layer, an NAS, an application layer, and a positioning function protocol layer. Alternatively, the lower protocol layer or the same protocol layer or the another protocol layer is a new protocol layer other than the PHY layer, the MAC layer, the BAP layer, the RLC layer, the PDCP layer, the RRC layer, the SDAP layer, the NAS, the application layer, and the positioning function protocol layer.

In a possible design of this embodiment, any one of the at least one AI information data packet at least includes a data packet number information field and an AI information data field. The AI information data field contains all or part of the AI information.

In a possible design of this embodiment, any one of the at least one AI information data packet further includes at least one of a model identity information field, a model description information field, a data packet importance-level indication information field, or a data packet QoS indication information field.

In a possible design of this embodiment, the at least one AI information data packet includes: an AI information data packet indicating start of transmission of the AI information and/or an AI information data packet indicating end of transmission of the AI information.

In a possible design of this embodiment, the fourth functional entity 1150 is contained in a sixth protocol layer, or the fourth functional entity 1150 is a non-protocol-layer functional entity. The sixth protocol layer is any one of a PHY layer, an MAC layer, a BAP layer, an RLC layer, a PDCP layer, an RRC layer, an SDAP layer, an NAS, an application layer, and a positioning function protocol layer. Alternatively, the sixth protocol layer is a new protocol layer other than the PHY layer, the MAC layer, the BAP layer, the RLC layer, the PDCP layer, the RRC layer, the SDAP layer, the NAS, the application layer, and the positioning function protocol layer.

In a possible design of this embodiment, the at least one of the AI information transmission processing functions is performed by the same third functional entity 1140 or each performed by a different third functional entity 1140, or at least two of the AI information transmission processing functions are performed by different third functional entities 1140.

In a possible design of this embodiment, the same set of AI information is transmitted on one or more session resources, each session identity is associated with one or more RB resources, and all RB resources associated with the same session identity are associated with the same third functional entity 1140.

In a possible design of this embodiment, the same set of AI information is associated with the same model identity information and is transmitted on one or more RB resources, and all RB resources associated with each model identity information are associated with the same third functional entity 1140.

In a possible design of this embodiment, the same set of AI information is transmitted on one or more RB resources, and one RB resource or a group of RB resources associated with each set of AI information is associated with the same third functional entity 1140.

In a possible design of this embodiment, the first transmitting module 1110 is further configured to send a transmission requirement message to the second device. The transmission requirement message indicates at least one set of AI information to be uploaded by the first device.

In a possible design of this embodiment, the first transmitting module 1110 is further configured to receive a transmission request message from the second device. The transmission request message indicates the first device to upload at least one set of AI information to the second device.

In a possible design of this embodiment, the first transmitting module 1110 is further configured to receive configuration information from the second device. The configuration information is used for configuring or indicates the transmission resource configuration.

In a possible design of this embodiment, the first transmitting module 1110 is further configured to send response information to the second device. The response information is used for confirming that the configuration information is successfully received.

In a possible design of this embodiment, the transmission resource configuration includes at least one of: at least one RB identity information; model identity information associated with the AI information; session identity information associated with the AI information; number information associated with the last AI information data packet corresponding to the AI information; information of the total number of AI information data packets corresponding to the AI information; data importance-level indication information associated with the AI information; data QoS parameter information associated with the AI information; model description information associated with the AI information; a related configuration of the first functional entity 1120; destination identity information associated with the AI information; or number information associated with the first AI information data packet corresponding to the AI information.

In a possible design of this embodiment, the AI information includes at least one of: model identity information; model description information; or model algorithm data information.

In a possible design of this embodiment, the first device and the second device satisfy one of the following. The first device is a terminal device, and the second device is a network device. Alternatively, the first device is the network device, and the second device is the terminal device. Alternatively, the first device and the second device each are the network device. Alternatively, the first device and the second device each are the terminal device.

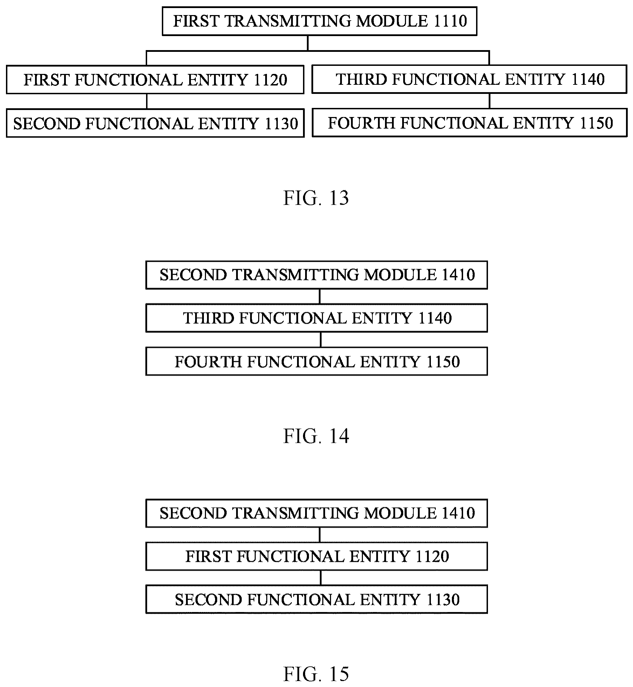

FIG. 13 is a block diagram of an information transmission apparatus provided in an exemplary embodiment of the disclosure. The apparatus includes a first transmitting module 1110. The first transmitting module 1110 is configured to transmit AI information by using a transmission resource configuration sent by a second device, where the AI information is information related to an AI/ML model.

In a possible design of this embodiment, the first transmitting module 1110 is configured to receive the AI information by using the transmission resource configuration sent by the second device; and/or send the AI information by using the transmission resource configuration sent by the second device.

In a possible design of this embodiment, the apparatus further includes a first functional entity 1120 and a second functional entity 1130. The first functional entity 1120 is configured to perform at least one of the following AI information transmission processing functions: reassembling at least one AI information data packet delivered by a lower protocol layer or another protocol layer or another functional entity in the same protocol layer; associating the reassembled AI information with model identity information, where the model identity information is used for identifying an AI/ML model associated with the AI information; delivering the reassembled AI information to the second functional entity 1130; discarding an AI information data packet that is unable to be reassembled; or generating a first message, where the first message is used for notifying the second device that the AI information is successfully reassembled or is not successfully reassembled.

In a possible design of this embodiment, the at least one AI information data packet is delivered by the lower protocol layer to the first functional entity 1120. The first functional entity 1120 is contained in a first protocol layer or a second protocol layer. The first protocol layer is any one of an MAC layer, a BAP layer, an RLC layer, a PDCP layer, an RRC layer, an SDAP layer, an NAS, an application layer, and a positioning function protocol layer. The second protocol layer is a new protocol layer other than the MAC layer, the BAP layer, the RLC layer, the PDCP layer, the RRC layer, the SDAP layer, the NAS, the application layer, and the positioning function protocol layer.

In a possible design of this embodiment, the at least one AI information data packet is delivered by the another protocol layer to the first functional entity 1120. The first functional entity 1120 is not part of protocol layer functions, or the first functional entity 1120 is a non-protocol-layer functional entity.

In a possible design of this embodiment, the at least one AI information data packet is delivered by the another functional entity in the same protocol layer to the first functional entity 1120. The first functional entity 1120 is contained in a first protocol layer or a second protocol layer. The first protocol layer is any one of an MAC layer, a BAP layer, an RLC layer, a PDCP layer, an RRC layer, an SDAP layer, an NAS, an application layer, and a positioning function protocol layer. The second protocol layer is a new protocol layer other than the MAC layer, the BAP layer, the RLC layer, the PDCP layer, the RRC layer, the SDAP layer, the NAS, the application layer, and the positioning function protocol layer.

In a possible design of this embodiment, the lower protocol layer or the same protocol layer or the another protocol layer is any one of a PHY layer, an MAC layer, a BAP layer, an RLC layer, a PDCP layer, an RRC layer, an SDAP layer, an NAS, an application layer, and a positioning function protocol layer. Alternatively, the lower protocol layer or the same protocol layer or the another protocol layer is a new protocol layer other than the PHY layer, the MAC layer, the BAP layer, the RLC layer, the PDCP layer, the RRC layer, the SDAP layer, the NAS, the application layer, and the positioning function protocol layer.

In a possible design of this embodiment, any one of the at least one AI information data packet at least includes a data packet number information field and an AI information data field. The AI information data field contains all or part of the AI information.

In a possible design of this embodiment, any one of the at least one AI information data packet further includes at least one of a model identity information field, a model description information field, a data packet importance-level indication information field, or a data packet QoS indication information field.

In a possible design of this embodiment, the at least one AI information data packet includes: an AI information data packet indicating start of transmission of the AI information and/or an AI information data packet indicating end of transmission of the AI information.

In a possible design of this embodiment, the AI information is in one-to-one association with or in many-to-one association with the model identity information.

In a possible design of this embodiment, the second functional entity 1130 is contained in a third protocol layer, or the second functional entity 1130 is a non-protocol-layer functional entity. The third protocol layer is any one of a PHY layer, an MAC layer, a BAP layer, an RLC layer, a PDCP layer, an RRC layer, an SDAP layer, an NAS, an application layer, and a positioning function protocol layer. Alternatively, the third protocol layer is a new protocol layer other than the PHY layer, the MAC layer, the BAP layer, the RLC layer, the PDCP layer, the RRC layer, the SDAP layer, the NAS, the application layer, and the positioning function protocol layer.

In a possible design of this embodiment, the first functional entity 1120 is configured to route or deliver the AI information to the second functional entity 1130 based on at least one of: the AI information; model identity information associated with the AI information; or destination identity information associated with the AI information.

In a possible design of this embodiment, the first functional entity 1120 is configured to discard, based on a model reassembly timer, the AI information data packet that is unable to be reassembled. The model reassembly timer is associated with the data packet reassembly of the first functional entity 1120.

In a possible design of this embodiment, the first functional entity 1120 is configured to discard all AI information data packets or an AI information data packet that has not been reassembled, when the model reassembly timer expires.

In a possible design of this embodiment, the first functional entity 1120 is configured to start the model reassembly timer, in the case where the first functional entity 1120 receives the first AI information data packet associated with the AI information. Alternatively, the first functional entity 1120 is configured to start the model reassembly timer, in the case where the first functional entity 1120 receives an AI information data packet with number 0 or number 1 or a minimum number associated with the AI information. Alternatively, the first functional entity 1120 is configured to start the model reassembly timer, in the case where the first functional entity 1120 receives the last AI information data packet or an AI information data packet with a maximum number associated with the AI information. Alternatively, the first functional entity 1120 is configured to start the model reassembly timer, when a silence timer expires. The silence timer is restarted in the case where an AI information data packet is received within a timing period, and expires in the case where no AI information data packet is received within the timing period.

In a possible design of this embodiment, the at least one of the AI information transmission processing functions is performed by the same first functional entity 1120 or each performed by a different first functional entity 1120, or at least two of the AI information transmission processing functions are performed by different first functional entities 1120.

In a possible design of this embodiment, the same set of AI information is transmitted on one or more session resources, each session identity is associated with one or more RB resources, and all RB resources associated with the same session identity are associated with the same first functional entity 1120.

In a possible design of this embodiment, the same set of AI information is associated with the same model identity information and is transmitted on one or more RB resources, and all RB resources associated with each model identity information are associated with the same first functional entity 1120.

In a possible design of this embodiment, the same set of AI information is transmitted on one or more RB resources, and one RB resource or a group of RB resources associated with each set of AI information is associated with the same first functional entity 1120.

In a possible design of this embodiment, the apparatus further includes a third functional entity 1140 and a fourth functional entity 1150. The third functional entity 1140 is configured to perform at least one of the following AI information transmission processing functions: receiving the AI information delivered by the fourth functional entity 1150; splitting the AI information into at least one AI information data packet; associating each of the at least one AI information data packet with QoS parameter information; associating each of the at least one AI information data packet with importance-level indication information; delivering at least one processed AI information data packet to a lower protocol layer or another protocol layer or another functional entity in the same protocol layer; or receiving a second message, where the second message is used for notifying the first device that the AI information is successfully reassembled or is not successfully reassembled.

In a possible design of this embodiment, the third functional entity 1140 is configured to deliver the processed AI information data packet to the lower protocol layer. The third functional entity 1140 is contained in a fourth protocol layer or a fifth protocol layer. The fourth protocol layer is any one of an MAC layer, a BAP layer, an RLC layer, a PDCP layer, an RRC layer, an SDAP layer, an NAS, an application layer, and a positioning function protocol layer. The fifth protocol layer is a new protocol layer other than the MAC layer, the BAP layer, the RLC layer, the PDCP layer, the RRC layer, the SDAP layer, the NAS, the application layer, and the positioning function protocol layer.

In a possible design of this embodiment, the third functional entity 1140 is configured to deliver the processed AI information data packet to the another protocol layer. The third functional entity 1140 is not part of protocol layer functions, or the third functional entity 1140 is a non-protocol-layer functional entity.

In a possible design of this embodiment, the third functional entity 1140 is configured to deliver the processed AI information data packet to the another functional entity in the same protocol layer. The third functional entity 1140 is contained in a fourth protocol layer or a fifth protocol layer. The fourth protocol layer is any one of an MAC layer, a BAP layer, an RLC layer, a PDCP layer, an RRC layer, an SDAP layer, an NAS, an application layer, and a positioning function protocol layer. The fifth protocol layer is a new protocol layer other than the MAC layer, the BAP layer, the RLC layer, the PDCP layer, the RRC layer, the SDAP layer, the NAS, the application layer, and the positioning function protocol layer.

In a possible design of this embodiment, the lower protocol layer or the same protocol layer or the another protocol layer is any one of a PHY layer, an MAC layer, a BAP layer, an RLC layer, a PDCP layer, an RRC layer, an SDAP layer, an NAS, an application layer, and a positioning function protocol layer. Alternatively, the lower protocol layer or the same protocol layer or the another protocol layer is a new protocol layer other than the PHY layer, the MAC layer, the BAP layer, the RLC layer, the PDCP layer, the RRC layer, the SDAP layer, the NAS, the application layer, and the positioning function protocol layer.

In a possible design of this embodiment, any one of the at least one AI information data packet at least includes a data packet number information field and an AI information data field. The AI information data field contains all or part of the AI information.

In a possible design of this embodiment, any one of the at least one AI information data packet further includes at least one of a model identity information field, a model description information field, a data packet importance-level indication information field, or a data packet QoS indication information field.

In a possible design of this embodiment, the at least one AI information data packet includes: an AI information data packet indicating start of transmission of the AI information and/or an AI information data packet indicating end of transmission of the AI information.

In a possible design of this embodiment, the fourth functional entity 1150 is contained in a sixth protocol layer, or the fourth functional entity 1150 is a non-protocol-layer functional entity. The sixth protocol layer is any one of a PHY layer, an MAC layer, a BAP layer, an RLC layer, a PDCP layer, an RRC layer, an SDAP layer, an NAS, an application layer, and a positioning function protocol layer. Alternatively, the sixth protocol layer is a new protocol layer other than the PHY layer, the MAC layer, the BAP layer, the RLC layer, the PDCP layer, the RRC layer, the SDAP layer, the NAS, the application layer, and the positioning function protocol layer.

In a possible design of this embodiment, the at least one of the AI information transmission processing functions is performed by the same third functional entity 1140 or each performed by a different third functional entity 1140, or at least two of the AI information transmission processing functions are performed by different third functional entities 1140.

In a possible design of this embodiment, the same set of AI information is transmitted on one or more session resources, each session identity is associated with one or more RB resources, and all RB resources associated with the same session identity are associated with the same third functional entity 1140.

In a possible design of this embodiment, the same set of AI information is associated with the same model identity information and is transmitted on one or more RB resources, and all RB resources associated with each model identity information are associated with the same third functional entity 1140.

In a possible design of this embodiment, the same set of AI information is transmitted on one or more RB resources, and one RB resource or a group of RB resources associated with each set of AI information is associated with the same third functional entity 1140.

In a possible design of this embodiment, the first transmitting module 1110 is further configured to send a transmission requirement message to the second device. The transmission requirement message indicates at least one set of AI information to be uploaded by the first device.

In a possible design of this embodiment, the first transmitting module 1110 is further configured to receive a transmission request message from the second device. The transmission request message indicates the first device to upload at least one set of AI information to the second device.

In a possible design of this embodiment, the first transmitting module 1110 is further configured to receive configuration information from the second device. The configuration information is used for configuring or indicates the transmission resource configuration.

In a possible design of this embodiment, the first transmitting module 1110 is further configured to send response information to the second device. The response information is used for confirming that the configuration information is successfully received.

In a possible design of this embodiment, the transmission resource configuration includes at least one of: at least one RB identity information; model identity information associated with the AI information; session identity information associated with the AI information; number information associated with the last AI information data packet corresponding to the AI information; information of the total number of AI information data packets corresponding to the AI information; data importance-level indication information associated with the AI information; data QoS parameter information associated with the AI information; model description information associated with the AI information; a related configuration of the first functional entity 1120; destination identity information associated with the AI information; or number information associated with the first AI information data packet corresponding to the AI information.

In a possible design of this embodiment, the AI information includes at least one of: model identity information; model description information; or model algorithm data information.

In a possible design of this embodiment, the first device and the second device satisfy one of the following. The first device is a terminal device, and the second device is a network device. Alternatively, the first device is the network device, and the second device is the terminal device. Alternatively, the first device and the second device each are the network device. Alternatively, the first device and the second device each are the terminal device.

FIG. 14 is a block diagram of an information transmission apparatus provided in an exemplary embodiment of the disclosure. The apparatus includes a second transmitting module 1410. The second transmitting module 1410 is configured to transmit AI information by using a transmission resource configuration sent to a first device, where the AI information is information related to an AI/ML model.

In a possible design of this embodiment, the second transmitting module 1410 is configured to send the AI information to the first device by using the transmission resource configuration sent to the first device.

In a possible design of this embodiment, the apparatus further includes a third functional entity 1140 and a fourth functional entity 1150. The third functional entity 1140 is configured to perform at least one of the following AI information transmission processing functions: receiving the AI information delivered by the fourth functional entity 1150; splitting the AI information into at least one AI information data packet; associating each of the at least one AI information data packet with QoS parameter information; associating each of the at least one AI information data packet with importance-level indication information; delivering at least one processed AI information data packet to a lower protocol layer or another protocol layer or another functional entity in the same protocol layer; or receiving a first message, where the first message is used for notifying the second device that the AI information is successfully reassembled or is not successfully reassembled.

In a possible design of this embodiment, the third functional entity 1140 is configured to deliver the processed AI information data packet to the lower protocol layer. The third functional entity 1140 is contained in a fourth protocol layer or a fifth protocol layer. The fourth protocol layer is any one of an MAC layer, a BAP layer, an RLC layer, a PDCP layer, an RRC layer, an SDAP layer, an NAS, an application layer, and a positioning function protocol layer. The fifth protocol layer is a new protocol layer other than the MAC layer, the BAP layer, the RLC layer, the PDCP layer, the RRC layer, the SDAP layer, the NAS, the application layer, and the positioning function protocol layer.

In a possible design of this embodiment, the third functional entity 1140 is configured to deliver the processed AI information data packet to the another protocol layer. The third functional entity 1140 is not part of protocol layer functions, or the third functional entity 1140 is a non-protocol-layer functional entity.

In a possible design of this embodiment, the third functional entity 1140 is configured to deliver the processed AI information data packet to the another functional entity in the same protocol layer. The third functional entity 1140 is contained in a fourth protocol layer or a fifth protocol layer. The fourth protocol layer is any one of an MAC layer, a BAP layer, an RLC layer, a PDCP layer, an RRC layer, an SDAP layer, an NAS, an application layer, and a positioning function protocol layer. The fifth protocol layer is a new protocol layer other than the MAC layer, the BAP layer, the RLC layer, the PDCP layer, the RRC layer, the SDAP layer, the NAS, the application layer, and the positioning function protocol layer.

In a possible design of this embodiment, the lower protocol layer or the same protocol layer or the another protocol layer is any one of a PHY layer, an MAC layer, a BAP layer, an RLC layer, a PDCP layer, an RRC layer, an SDAP layer, an NAS, an application layer, and a positioning function protocol layer. Alternatively, the lower protocol layer or the same protocol layer or the another protocol layer is a new protocol layer other than the PHY layer, the MAC layer, the BAP layer, the RLC layer, the PDCP layer, the RRC layer, the SDAP layer, the NAS, the application layer, and the positioning function protocol layer.

In a possible design of this embodiment, any one of the at least one AI information data packet at least includes a data packet number information field and an AI information data field. The AI information data field contains all or part of the AI information.

In a possible design of this embodiment, any one of the at least one AI information data packet further includes at least one of a model identity information field, a model description information field, a data packet importance-level indication information field, or a data packet QoS indication information field.

In a possible design of this embodiment, the at least one AI information data packet includes: an AI information data packet indicating start of transmission of the AI information and/or an AI information data packet indicating end of transmission of the AI information.

In a possible design of this embodiment, the fourth functional entity 1150 is contained in a sixth protocol layer, or the fourth functional entity 1150 is a non-protocol-layer functional entity. The sixth protocol layer is any one of a PHY layer, an MAC layer, a BAP layer, an RLC layer, a PDCP layer, an RRC layer, an SDAP layer, an NAS, an application layer, and a positioning function protocol layer. Alternatively, the sixth protocol layer is a new protocol layer other than the PHY layer, the MAC layer, the BAP layer, the RLC layer, the PDCP layer, the RRC layer, the SDAP layer, the NAS, the application layer, and the positioning function protocol layer.

In a possible design of this embodiment, the at least one of the AI information transmission processing functions is performed by the same third functional entity 1140 or each performed by a different third functional entity 1140, or at least two of the AI information transmission processing functions are performed by different third functional entities 1140.

In a possible design of this embodiment, the same set of AI information is transmitted on one or more session resources, each session identity is associated with one or more RB resources, and all RB resources associated with the same session identity are associated with the same third functional entity 1140.

In a possible design of this embodiment, the same set of AI information is associated with the same model identity information and is transmitted on one or more RB resources, and all RB resources associated with each model identity information are associated with the same third functional entity 1140.

In a possible design of this embodiment, the same set of AI information is transmitted on one or more RB resources, and one RB resource or a group of RB resources associated with each set of AI information is associated with the same third functional entity 1140.

In a possible design of this embodiment, the second transmitting module 1410 is further configured to send configuration information to the first device. The configuration information is used for configuring or indicates the transmission resource configuration.

In a possible design of this embodiment, the second transmitting module 1410 is further configured to receive response information from the first device. The response information is used for confirming that the configuration information is successfully received.

In a possible design of this embodiment, the transmission resource configuration includes at least one of: at least one RB identity information; model identity information associated with the AI information; session identity information associated with the AI information; number information associated with the last AI information data packet corresponding to the AI information; information of the total number of AI information data packets corresponding to the AI information; data importance-level indication information associated with the AI information; data QoS parameter information associated with the AI information; model description information associated with the AI information; a related configuration of the third functional entity 1140; destination identity information associated with the AI information; or number information associated with the first AI information data packet corresponding to the AI information.

In a possible design of this embodiment, the AI information includes at least one of: model identity information; model description information; or model algorithm data information.

In a possible design of this embodiment, the first device and the second device satisfy one of the following. The first device is a terminal device, and the second device is a network device. Alternatively, the first device is the network device, and the second device is the terminal device. Alternatively, the first device and the second device each are the network device. Alternatively, the first device and the second device each are the terminal device.

FIG. 15 is a block diagram of an information transmission apparatus provided in an exemplary embodiment of the disclosure. The apparatus includes a second transmitting module 1410. The second transmitting module 1410 is configured to transmit AI information by using a transmission resource configuration sent to a first device, where the AI information is information related to an AI/ML model.

In a possible design of this embodiment, the second transmitting module 1410 is configured to receive the AI information from the first device by using the transmission resource configuration sent to the first device.

In a possible design of this embodiment, the apparatus further includes a first functional entity 1120 and a second functional entity 1130. The first functional entity 1120 is configured to perform at least one of the following Al information transmission processing functions: reassembling at least one AI information data packet delivered by a lower protocol layer or another protocol layer or another functional entity in the same protocol layer; associating the reassembled AI information with model identity information, where the model identity information is used for identifying an AI/ML model associated with the AI information; delivering the reassembled AI information to the second functional entity 1130; discarding an AI information data packet that is unable to be reassembled; or generating a second message, where the second message is used for notifying the first device that the AI information is successfully reassembled or is not successfully reassembled.

In a possible design of this embodiment, the at least one AI information data packet is delivered by the lower protocol layer to the first functional entity 1120. The first functional entity 1120 is contained in a first protocol layer or a second protocol layer. The first protocol layer is any one of an MAC layer, a BAP layer, an RLC layer, a PDCP layer, an RRC layer, an SDAP layer, an NAS, an application layer, and a positioning function protocol layer. The second protocol layer is a new protocol layer other than the MAC layer, the BAP layer, the RLC layer, the PDCP layer, the RRC layer, the SDAP layer, the NAS, the application layer, and the positioning function protocol layer.

In a possible design of this embodiment, the at least one AI information data packet is delivered by the another protocol layer to the first functional entity 1120. The first functional entity 1120 is not part of protocol layer functions, or the first functional entity 1120 is a non-protocol-layer functional entity.

In a possible design of this embodiment, the at least one AI information data packet is delivered by the another functional entity in the same protocol layer to the first functional entity 1120. The first functional entity 1120 is contained in a first protocol layer or a second protocol layer. The first protocol layer is any one of an MAC layer, a BAP layer, an RLC layer, a PDCP layer, an RRC layer, an SDAP layer, an NAS, an application layer, and a positioning function protocol layer. The second protocol layer is a new protocol layer other than the MAC layer, the BAP layer, the RLC layer, the PDCP layer, the RRC layer, the SDAP layer, the NAS, the application layer, and the positioning function protocol layer.

In a possible design of this embodiment, the lower protocol layer or the same protocol layer or the another protocol layer is any one of a PHY layer, an MAC layer, a BAP layer, an RLC layer, a PDCP layer, an RRC layer, an SDAP layer, an NAS, an application layer, and a positioning function protocol layer. Alternatively, the lower protocol layer or the same protocol layer or the another protocol layer is a new protocol layer other than the PHY layer, the MAC layer, the BAP layer, the RLC layer, the PDCP layer, the RRC layer, the SDAP layer, the NAS, the application layer, and the positioning function protocol layer.

In a possible design of this embodiment, any one of the at least one AI information data packet at least includes a data packet number information field and an AI information data field. The AI information data field contains all or part of the AI information.

In a possible design of this embodiment, any one of the at least one AI information data packet further includes at least one of a model identity information field, a model description information field, a data packet importance-level indication information field, or a data packet QoS indication information field.

In a possible design of this embodiment, the at least one AI information data packet includes: an AI information data packet indicating start of transmission of the AI information and/or an AI information data packet indicating end of transmission of the AI information.

In a possible design of this embodiment, the AI information is in one-to-one association with or in many-to-one association with the model identity information.

In a possible design of this embodiment, the second functional entity 1130 is contained in a third protocol layer, or the second functional entity 1130 is a non-protocol-layer functional entity. The third protocol layer is any one of a PHY layer, an MAC layer, a BAP layer, an RLC layer, a PDCP layer, an RRC layer, an SDAP layer, an NAS, an application layer, and a positioning function protocol layer. Alternatively, the third protocol layer is a new protocol layer other than the PHY layer, the MAC layer, the BAP layer, the RLC layer, the PDCP layer, the RRC layer, the SDAP layer, the NAS, the application layer, and the positioning function protocol layer.

In a possible design of this embodiment, the first functional entity 1120 is configured to route or deliver the AI information to the second functional entity 1130 based on at least one of: the AI information; model identity information associated with the AI information; or destination identity information associated with the AI information.

In a possible design of this embodiment, the first functional entity 1120 is configured to discard, based on a model reassembly timer, the AI information data packet that is unable to be reassembled. The model reassembly timer is associated with the data packet reassembly of the first functional entity 1120.

In a possible design of this embodiment, the first functional entity 1120 is configured to discard all AI information data packets or an AI information data packet that has not been reassembled, when the model reassembly timer expires.

In a possible design of this embodiment, the first functional entity 1120 is configured to start the model reassembly timer, in the case where the first functional entity 1120 receives the first AI information data packet associated with the AI information. Alternatively, the first functional entity 1120 is configured to start the model reassembly timer, in the case where the first functional entity 1120 receives an AI information data packet with number 0 or number 1 or a minimum number associated with the AI information. Alternatively, the first functional entity 1120 is configured to start the model reassembly timer, in the case where the first functional entity 1120 receives the last AI information data packet or an AI information data packet with a maximum number associated with the AI information. Alternatively, the first functional entity 1120 is configured to start the model reassembly timer, when a silence timer expires. The silence timer is restarted in the case where an AI information data packet is received within a timing period, and expires in the case where no AI information data packet is received within the timing period.

In a possible design of this embodiment, the at least one of the AI information transmission processing functions is performed by the same first functional entity 1120 or each performed by a different first functional entity 1120, or at least two of the AI information transmission processing functions are performed by different first functional entities 1120.

In a possible design of this embodiment, the same set of AI information is transmitted on one or more session resources, each session identity is associated with one or more RB resources, and all RB resources associated with the same session identity are associated with the same first functional entity 1120.

In a possible design of this embodiment, the same set of AI information is associated with the same model identity information and is transmitted on one or more RB resources, and all RB resources associated with each model identity information are associated with the same first functional entity 1120.

In a possible design of this embodiment, the same set of AI information is transmitted on one or more RB resources, and one RB resource or a group of RB resources associated with each set of AI information is associated with the same first functional entity 1120.

In a possible design of this embodiment, the second transmitting module 1410 is further configured to receive a transmission requirement message from the first device. The transmission requirement message indicates at least one set of AI information to be uploaded by the first device.

In a possible design of this embodiment, the second transmitting module 1410 is further configured to send a transmission request message. The transmission request message indicates the first device to upload at least one set of AI information to the second device.

In a possible design of this embodiment, the second transmitting module 1410 is further configured to send configuration information to the first device. The configuration information is used for configuring or indicates the transmission resource configuration.

In a possible design of this embodiment, the second transmitting module 1410 is further configured to receive response information from the first device. The response information is used for confirming that the configuration information is successfully received.

In a possible design of this embodiment, the transmission resource configuration includes at least one of: at least one RB identity information; model identity information associated with the AI information; session identity information associated with the AI information; number information associated with the last AI information data packet corresponding to the AI information; information of the total number of AI information data packets corresponding to the AI information; data importance-level indication information associated with the AI information; data QoS parameter information associated with the AI information; model description information associated with the AI information; a related configuration of the third functional entity 1140; destination identity information associated with the AI information; or number information associated with the first AI information data packet corresponding to the AI information.

In a possible design of this embodiment, the AI information includes at least one of: model identity information; model description information; or model algorithm data information.

In a possible design of this embodiment, the first device and the second device satisfy one of the following. The first device is a terminal device, and the second device is a network device. Alternatively, the first device is the network device, and the second device is the terminal device. Alternatively, the first device and the second device each are the network device. Alternatively, the first device and the second device each are the terminal device.

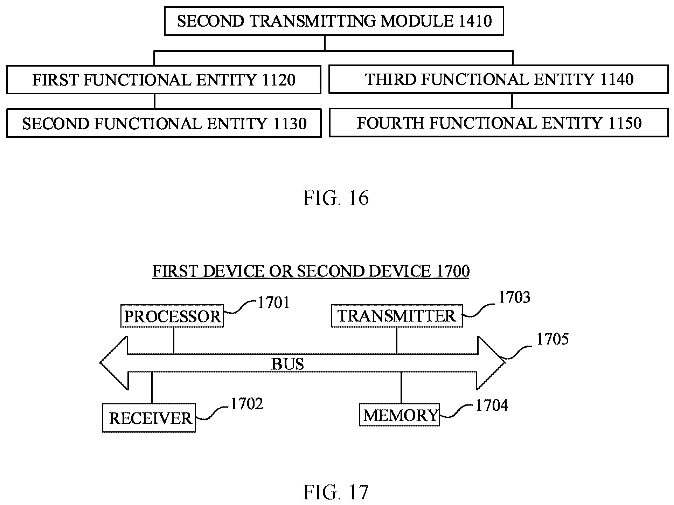

FIG. 16 is a block diagram of an information transmission apparatus provided in an exemplary embodiment of the disclosure. The apparatus includes a second transmitting module 1410. The second transmitting module 1410 is configured to transmit AI information by using a transmission resource configuration sent to a first device, where the AI information is information related to an AI/ML model.

In a possible design of this embodiment, the second transmitting module 1410 is configured to send the AI information to the first device by using the transmission resource configuration sent to the first device; and/or receive the AI information from the first device by using the transmission resource configuration sent to the first device.

In a possible design of this embodiment, the apparatus further includes a third functional entity 1140 and a fourth functional entity 1150. The third functional entity 1140 is configured to perform at least one of the following AI information transmission processing functions: receiving the AI information delivered by the fourth functional entity 1150; splitting the AI information into at least one AI information data packet; associating each of the at least one AI information data packet with QoS parameter information; associating each of the at least one AI information data packet with importance-level indication information; delivering at least one processed AI information data packet to a lower protocol layer or another protocol layer or another functional entity in the same protocol layer; or receiving a first message, where the first message is used for notifying the second device that the AI information is successfully reassembled or is not successfully reassembled.

In a possible design of this embodiment, the third functional entity 1140 is configured to deliver the processed AI information data packet to the lower protocol layer. The third functional entity 1140 is contained in a fourth protocol layer or a fifth protocol layer. The fourth protocol layer is any one of an MAC layer, a BAP layer, an RLC layer, a PDCP layer, an RRC layer, an SDAP layer, an NAS, an application layer, and a positioning function protocol layer. The fifth protocol layer is a new protocol layer other than the MAC layer, the BAP layer, the RLC layer, the PDCP layer, the RRC layer, the SDAP layer, the NAS, the application layer, and the positioning function protocol layer.

In a possible design of this embodiment, the third functional entity 1140 is configured to deliver the processed AI information data packet to the another protocol layer. The third functional entity 1140 is not part of protocol layer functions, or the third functional entity 1140 is a non-protocol-layer functional entity.

In a possible design of this embodiment, the third functional entity 1140 is configured to deliver the processed AI information data packet to the another functional entity in the same protocol layer. The third functional entity 1140 is contained in a fourth protocol layer or a fifth protocol layer. The fourth protocol layer is any one of an MAC layer, a BAP layer, an RLC layer, a PDCP layer, an RRC layer, an SDAP layer, an NAS, an application layer, and a positioning function protocol layer. The fifth protocol layer is a new protocol layer other than the MAC layer, the BAP layer, the RLC layer, the PDCP layer, the RRC layer, the SDAP layer, the NAS, the application layer, and the positioning function protocol layer.

In a possible design of this embodiment, the lower protocol layer or the same protocol layer or the another protocol layer is any one of a PHY layer, an MAC layer, a BAP layer, an RLC layer, a PDCP layer, an RRC layer, an SDAP layer, an NAS, an application layer, and a positioning function protocol layer. Alternatively, the lower protocol layer or the same protocol layer or the another protocol layer is a new protocol layer other than the PHY layer, the MAC layer, the BAP layer, the RLC layer, the PDCP layer, the RRC layer, the SDAP layer, the NAS, the application layer, and the positioning function protocol layer.

In a possible design of this embodiment, any one of the at least one AI information data packet at least includes a data packet number information field and an AI information data field. The AI information data field contains all or part of the AI information.

In a possible design of this embodiment, any one of the at least one AI information data packet further includes at least one of a model identity information field, a model description information field, a data packet importance-level indication information field, or a data packet QoS indication information field.

In a possible design of this embodiment, the at least one AI information data packet includes: an AI information data packet indicating start of transmission of the AI information and/or an AI information data packet indicating end of transmission of the AI information.

In a possible design of this embodiment, the fourth functional entity 1150 is contained in a sixth protocol layer, or the fourth functional entity 1150 is a non-protocol-layer functional entity. The sixth protocol layer is any one of a PHY layer, an MAC layer, a BAP layer, an RLC layer, a PDCP layer, an RRC layer, an SDAP layer, an NAS, an application layer, and a positioning function protocol layer. Alternatively, the sixth protocol layer is a new protocol layer other than the PHY layer, the MAC layer, the BAP layer, the RLC layer, the PDCP layer, the RRC layer, the SDAP layer, the NAS, the application layer, and the positioning function protocol layer.

In a possible design of this embodiment, the at least one of the AI information transmission processing functions is performed by the same third functional entity 1140 or each performed by a different third functional entity 1140, or at least two of the AI information transmission processing functions are performed by different third functional entities 1140.

In a possible design of this embodiment, the same set of AI information is transmitted on one or more session resources, each session identity is associated with one or more RB resources, and all RB resources associated with the same session identity are associated with the same third functional entity 1140.

In a possible design of this embodiment, the same set of AI information is associated with the same model identity information and is transmitted on one or more RB resources, and all RB resources associated with each model identity information are associated with the same third functional entity 1140.

In a possible design of this embodiment, the same set of AI information is transmitted on one or more RB resources, and one RB resource or a group of RB resources associated with each set of AI information is associated with the same third functional entity 1140.

In a possible design of this embodiment, the apparatus further includes a first functional entity 1120 and a second functional entity 1130. The first functional entity 1120 is configured to perform at least one of the following AI information transmission processing functions: reassembling at least one AI information data packet delivered by a lower protocol layer or another protocol layer or another functional entity in the same protocol layer; associating the reassembled AI information with model identity information, where the model identity information is used for identifying an AI/ML model associated with the AI information; delivering the reassembled AI information to the second functional entity 1130; discarding an AI information data packet that is unable to be reassembled; or generating a second message, where the second message is used for notifying the first device that the AI information is successfully reassembled or is not successfully reassembled.

In a possible design of this embodiment, the at least one AI information data packet is delivered by the lower protocol layer to the first functional entity 1120. The first functional entity 1120 is contained in a first protocol layer or a second protocol layer. The first protocol layer is any one of an MAC layer, a BAP layer, an RLC layer, a PDCP layer, an RRC layer, an SDAP layer, an NAS, an application layer, and a positioning function protocol layer. The second protocol layer is a new protocol layer other than the MAC layer, the BAP layer, the RLC layer, the PDCP layer, the RRC layer, the SDAP layer, the NAS, the application layer, and the positioning function protocol layer.

In a possible design of this embodiment, the at least one AI information data packet is delivered by the another protocol layer to the first functional entity 1120. The first functional entity 1120 is not part of protocol layer functions, or the first functional entity 1120 is a non-protocol-layer functional entity.

In a possible design of this embodiment, the at least one AI information data packet is delivered by the another functional entity in the same protocol layer to the first functional entity 1120. The first functional entity 1120 is contained in a first protocol layer or a second protocol layer. The first protocol layer is any one of an MAC layer, a BAP layer, an RLC layer, a PDCP layer, an RRC layer, an SDAP layer, an NAS, an application layer, and a positioning function protocol layer. The second protocol layer is a new protocol layer other than the MAC layer, the BAP layer, the RLC layer, the PDCP layer, the RRC layer, the SDAP layer, the NAS, the application layer, and the positioning function protocol layer.

In a possible design of this embodiment, the lower protocol layer or the same protocol layer or the another protocol layer is any one of a PHY layer, an MAC layer, a BAP layer, an RLC layer, a PDCP layer, an RRC layer, an SDAP layer, an NAS, an application layer, and a positioning function protocol layer. Alternatively, the lower protocol layer or the same protocol layer or the another protocol layer is a new protocol layer other than the PHY layer, the MAC layer, the BAP layer, the RLC layer, the PDCP layer, the RRC layer, the SDAP layer, the NAS, the application layer, and the positioning function protocol layer.

In a possible design of this embodiment, any one of the at least one AI information data packet at least includes a data packet number information field and an AI information data field. The AI information data field contains all or part of the AI information.

In a possible design of this embodiment, any one of the at least one AI information data packet further includes at least one of a model identity information field, a model description information field, a data packet importance-level indication information field, or a data packet QoS indication information field.

In a possible design of this embodiment, the at least one AI information data packet includes: an AI information data packet indicating start of transmission of the AI information and/or an AI information data packet indicating end of transmission of the AI information.

In a possible design of this embodiment, the AI information is in one-to-one association with or in many-to-one association with the model identity information.

In a possible design of this embodiment, the second functional entity 1130 is contained in a third protocol layer, or the second functional entity 1130 is a non-protocol-layer functional entity. The third protocol layer is any one of a PHY layer, an MAC layer, a BAP layer, an RLC layer, a PDCP layer, an RRC layer, an SDAP layer, an NAS, an application layer, and a positioning function protocol layer. Alternatively, the third protocol layer is a new protocol layer other than the PHY layer, the MAC layer, the BAP layer, the RLC layer, the PDCP layer, the RRC layer, the SDAP layer, the NAS, the application layer, and the positioning function protocol layer.

In a possible design of this embodiment, the first functional entity 1120 is configured to route or deliver the AI information to the second functional entity 1130 based on at least one of: the AI information; model identity information associated with the AI information; or destination identity information associated with the AI information.

In a possible design of this embodiment, the first functional entity 1120 is configured to discard, based on a model reassembly timer, the AI information data packet that is unable to be reassembled. The model reassembly timer is associated with the data packet reassembly of the first functional entity 1120.

In a possible design of this embodiment, the first functional entity 1120 is configured to discard all AI information data packets or an AI information data packet that has not been reassembled, when the model reassembly timer expires.

In a possible design of this embodiment, the first functional entity 1120 is configured to start the model reassembly timer, in the case where the first functional entity 1120 receives the first AI information data packet associated with the AI information. Alternatively, the first functional entity 1120 is configured to start the model reassembly timer, in the case where the first functional entity 1120 receives an AI information data packet with number 0 or number 1 or a minimum number associated with the AI information. Alternatively, the first functional entity 1120 is configured to start the model reassembly timer, in the case where the first functional entity 1120 receives the last AI information data packet or an AI information data packet with a maximum number associated with the AI information. Alternatively, the first functional entity 1120 is configured to start the model reassembly timer, when a silence timer expires. The silence timer is restarted in the case where an AI information data packet is received within a timing period, and expires in the case where no AI information data packet is received within the timing period.

In a possible design of this embodiment, the at least one of the AI information transmission processing functions is performed by the same first functional entity 1120 or each performed by a different first functional entity 1120, or at least two of the AI information transmission processing functions are performed by different first functional entities 1120.

In a possible design of this embodiment, the same set of AI information is transmitted on one or more session resources, each session identity is associated with one or more RB resources, and all RB resources associated with the same session identity are associated with the same first functional entity 1120.

In a possible design of this embodiment, the same set of AI information is associated with the same model identity information and is transmitted on one or more RB resources, and all RB resources associated with each model identity information are associated with the same first functional entity 1120.

In a possible design of this embodiment, the same set of AI information is transmitted on one or more RB resources, and one RB resource or a group of RB resources associated with each set of AI information is associated with the same first functional entity 1120.

In a possible design of this embodiment, the second transmitting module 1410 is further configured to receive a transmission requirement message from the first device. The transmission requirement message indicates at least one set of AI information to be uploaded by the first device.

In a possible design of this embodiment, the second transmitting module 1410 is further configured to send a transmission request message. The transmission request message indicates the first device to upload at least one set of AI information to the second device.

In a possible design of this embodiment, the second transmitting module 1410 is further configured to send configuration information to the first device. The configuration information is used for configuring or indicates the transmission resource configuration.

In a possible design of this embodiment, the second transmitting module 1410 is further configured to receive response information from the first device. The response information is used for confirming that the configuration information is successfully received.

In a possible design of this embodiment, the transmission resource configuration includes at least one of: at least one RB identity information; model identity information associated with the AI information; session identity information associated with the AI information; number information associated with the last AI information data packet corresponding to the AI information; information of the total number of AI information data packets corresponding to the AI information; data importance-level indication information associated with the AI information; data QoS parameter information associated with the AI information; model description information associated with the AI information; a related configuration of the third functional entity 1140; destination identity information associated with the AI information; or number information associated with the first AI information data packet corresponding to the AI information.

In a possible design of this embodiment, the AI information includes at least one of: model identity information; model description information; or model algorithm data information.

In a possible design of this embodiment, the first device and the second device satisfy one of the following. The first device is a terminal device, and the second device is a network device. Alternatively, the first device is the network device, and the second device is the terminal device. Alternatively, the first device and the second device each are the network device. Alternatively, the first device and the second device each are the terminal device.

FIG. 17 is a schematic structural diagram of a first device or a second device 1700 provided in an exemplary embodiment of the disclosure. The first device or the second device 1700 includes a processor 1701, a receiver 1702, a transmitter 1703, a memory 1704, and a bus 1705.

The processor 1701 includes one or more processing cores, and the processor 1701 executes various function applications and information processing by running software programs and modules.

The receiver 1702 and the transmitter 1703 may be implemented as a communication assembly, and the communication assembly may be a communication chip. The communication chip may be also referred to as a transceiver.

The memory 1704 is connected to the processor 1701 via the bus 1705.

The memory 1704 may be configured to store at least one instruction. The processor 1701 is configured to execute the at least one instruction to implement various steps in the above method embodiments.

In addition, the memory 1704 may be implemented by any type of volatile storage device or non-volatile storage device or a combination thereof. The volatile storage device or non-volatile storage device includes, but is not limited to, a magnetic disk or an optical disk, an electrically erasable programmable read-only memory (EEPROM), an erasable programmable read-only memory (EPROM), a static random-access memory (SRAM), a read-only memory (ROM), a magnetic memory, a flash memory, and a programmable read-only memory (PROM).

In one possible embodiment, a transceiver in the first device is configured for the first device to transmit AI information by using a transmission resource configuration sent by a second device. The AI information is information related to an AI/ML model.

In one possible embodiment, a transceiver in the second device is configured for the second device to transmit AI information by using a transmission resource configuration sent to a first device. The AI information is information related to an AI/ML model.

In an exemplary embodiment, a computer-readable storage medium is further provided. The computer-readable storage medium is configured to store at least one instruction, at least one program, a code set, or an instruction set which is loaded and executed by a processor to implement the information transmission method provided in the above method embodiments.

In an exemplary embodiment, a computer program product or a computer program is further provided. The computer program product or the computer program, when executed by a processor, causes the first device to perform the information transmission method provided in the above method embodiments.

It will be understood by those of ordinary skill in the art that, all or part of the steps in the above embodiments may be accomplished by means of hardware, or a program to instruct associated hardware. The program may be stored in a computer-readable storage medium. The storage medium may be an ROM, a magnetic disk, or an optical disk, etc.

The foregoing elaborations are merely optional embodiments of the disclosure, and are not intended for limiting the disclosure. Any modification, equivalent replacement, and improvement made within the concept and principle of the disclosure shall fall within the protection scope of the disclosure.

## Claims

1. An information transmission method, performed by a first device and comprising:
transmitting, by the first device, artificial intelligence (AI) information by using a transmission resource configuration sent by a second device, wherein the AI information is information related to an AI/machine learning (ML) model.

2. The method of claim 1, wherein transmitting, by the first device, the AI information by using the transmission resource configuration sent by the second device comprises:
receiving, by the first device, the AI information by using the transmission resource configuration sent by the second device; and/or
sending, by the first device, the AI information by using the transmission resource configuration sent by the second device.

3. The method of claim 2, wherein the first device receives the AI information by using the transmission resource configuration sent by the second device, the first device comprises at least one first functional entity, and the at least one first functional entity performs at least one of the following AI information transmission processing functions:
reassembling at least one AI information data packet delivered by a lower protocol layer or another protocol layer or another functional entity in a same protocol layer;
associating the reassembled AI information with model identity information, wherein the model identity information is used for identifying an AI/ML model associated with the Al information;
delivering the reassembled AI information to a second functional entity;
discarding an AI information data packet that is unable to be reassembled; or
generating a first message, wherein the first message is used for notifying the second device that the AI information is successfully reassembled or is not successfully reassembled.

4. The method of claim 3, wherein the at least one AI information data packet is delivered by the lower protocol layer to the at least one first functional entity;
the at least one first functional entity is contained in a first protocol layer or a second protocol layer;
the first protocol layer is any one of a media access control (MAC) layer, a backhaul adaptation protocol (BAP) layer, a radio link control (RLC) layer, a packet data convergence protocol (PDCP) layer, a radio resource control (RRC) layer, a service data adaptation protocol (SDAP) layer, a non-access stratum (NAS), an application layer, and a positioning function protocol layer; and
the second protocol layer is a new protocol layer other than the MAC layer, the BAP layer, the RLC layer, the PDCP layer, the RRC layer, the SDAP layer, the NAS, the application layer, and the positioning function protocol layer.

5. The method of claim 3, wherein the at least one AI information data packet is delivered by the another protocol layer to the at least one first functional entity; and
the at least one first functional entity is not part of protocol layer functions, or the at least one first functional entity is a non-protocol-layer functional entity.

6. The method of claim 3, wherein the at least one AI information data packet is delivered by the another functional entity in the same protocol layer to the at least one first functional entity;
the at least one first functional entity is contained in a first protocol layer or a second protocol layer;
the first protocol layer is any one of an MAC layer, a BAP layer, an RLC layer, a PDCP layer, an RRC layer, an SDAP layer, an NAS, an application layer, and a positioning function protocol layer; and
the second protocol layer is a new protocol layer other than the MAC layer, the BAP layer, the RLC layer, the PDCP layer, the RRC layer, the SDAP layer, the NAS, the application layer, and the positioning function protocol layer.

7. The method of any one of claims 3 to 6, wherein
the lower protocol layer or the same protocol layer or the another protocol layer is any one of a physical (PHY) layer, an MAC layer, a BAP layer, an RLC layer, a PDCP layer, an RRC layer, an SDAP layer, an NAS, an application layer, and a positioning function protocol layer; or
the lower protocol layer or the same protocol layer or the another protocol layer is a new protocol layer other than the PHY layer, the MAC layer, the BAP layer, the RLC layer, the PDCP layer, the RRC layer, the SDAP layer, the NAS, the application layer, and the positioning function protocol layer.

8. The method of any one of claims 3 to 7, wherein any one of the at least one AI information data packet at least comprises a data packet number information field and an AI information data field, wherein the AI information data field contains all or part of the AI information.

9. The method of claim 8, wherein any one of the at least one AI information data packet further comprises at least one of a model identity information field, a model description information field, a data packet importance-level indication information field, or a data packet quality of service (QoS) indication information field.

10. The method of any one of claims 3 to 9, wherein the at least one AI information data packet comprises: an AI information data packet indicating start of transmission of the AI information and/or an AI information data packet indicating end of transmission of the Al information.

11. The method of any one of claims 3 to 10, wherein
the AI information is in one-to-one association with or in many-to-one association with the model identity information.

12. The method of any one of claims 3 to 11, wherein the second functional entity is contained in a third protocol layer, or the second functional entity is a non-protocol-layer functional entity; and
the third protocol layer is any one of a PHY layer, an MAC layer, a BAP layer, an RLC layer, a PDCP layer, an RRC layer, an SDAP layer, an NAS, an application layer, and a positioning function protocol layer; or the third protocol layer is a new protocol layer other than the PHY layer, the MAC layer, the BAP layer, the RLC layer, the PDCP layer, the RRC layer, the SDAP layer, the NAS, the application layer, and the positioning function protocol layer.

13. The method of claim 12, wherein the at least one first functional entity routes or delivers the AI information to the second functional entity based on at least one of:
the AI information;
model identity information associated with the AI information; or
destination identity information associated with the AI information.

14. The method of any one of claims 3 to 13, wherein discarding, by the at least one first functional entity, the AI information data packet that is unable to be reassembled comprises:
discarding, by the at least one first functional entity based on a model reassembly timer, the AI information data packet that is unable to be reassembled, wherein
the model reassembly timer is associated with AI information data packet reassembly of the at least one first functional entity.

15. The method of claim 14, wherein discarding, by the at least one first functional entity based on the model reassembly timer, the AI information data packet that is unable to be reassembled comprises:
discarding, by the at least one first functional entity, all AI information data packets or an AI information data packet that has not been reassembled, when the model reassembly timer expires.

16. The method of claim 14 or 15, further comprising:
starting, by the at least one first functional entity, the model reassembly timer in response to receiving a first AI information data packet associated with the AI information; or
starting, by the at least one first functional entity, the model reassembly timer in response to receiving an AI information data packet with number 0 or number 1 or a minimum number associated with the AI information; or
starting, by the at least one first functional entity, the model reassembly timer in response to receiving a last AI information data packet or an AI information data packet with a maximum number associated with the AI information; or
starting, by the at least one first functional entity, the model reassembly timer when a silence timer expires, wherein
the silence timer is restarted in response to an AI information data packet being received within a timing period, and expires in response to no AI information data packet being received within the timing period.

17. The method of any one of claims 3 to 16, wherein the at least one of the AI information transmission processing functions is performed by a same first functional entity or each performed by a different first functional entity, or at least two of the AI information transmission processing functions are performed by different first functional entities.

18. The method of any one of claims 3 to 17, wherein a same set of AI information is transmitted on one or more session resources, each session identity is associated with one or more radio bearer (RB) resources, and all RB resources associated with a same session identity are associated with a same first functional entity.

19. The method of any one of claims 3 to 17, wherein a same set of AI information is associated with same model identity information and is transmitted on one or more RB resources, and all RB resources associated with each model identity information are associated with a same first functional entity.

20. The method of any one of claims 3 to 17, wherein a same set of AI information is transmitted on one or more RB resources, and one RB resource or a group of RB resources associated with each set of AI information is associated with a same first functional entity.

21. The method of claim 2, wherein the first device sends the AI information by using the transmission resource configuration sent by the second device, the first device comprises at least one third functional entity, and the at least one third functional entity performs at least one of the following AI information transmission processing functions:
receiving the AI information delivered by a fourth functional entity;
splitting the AI information into at least one AI information data packet;
associating each of the at least one AI information data packet with QoS parameter information;
associating each of the at least one AI information data packet with importance-level indication information;
delivering at least one processed AI information data packet to a lower protocol layer or another protocol layer or another functional entity in a same protocol layer; or
receiving a second message, wherein the second message is used for notifying the first device that the AI information is successfully reassembled or is not successfully reassembled.

22. The method of claim 21, wherein the at least one third functional entity delivers the at least one processed AI information data packet to the lower protocol layer;
the at least one third functional entity is contained in a fourth protocol layer or a fifth protocol layer;
the fourth protocol layer is any one of an MAC layer, a BAP layer, an RLC layer, a PDCP layer, an RRC layer, an SDAP layer, an NAS, an application layer, and a positioning function protocol layer; and
the fifth protocol layer is a new protocol layer other than the MAC layer, the BAP layer, the RLC layer, the PDCP layer, the RRC layer, the SDAP layer, the NAS, the application layer, and the positioning function protocol layer.

23. The method of claim 21, wherein the at least one third functional entity delivers the at least one processed AI information data packet to the another protocol layer; and
the at least one third functional entity is not part of protocol layer functions, or the at least one third functional entity is a non-protocol-layer functional entity.

24. The method of claim 21, wherein the at least one third functional entity delivers the at least one processed AI information data packet to the another functional entity in the same protocol layer;
the at least one third functional entity is contained in a fourth protocol layer or a fifth protocol layer;
the fourth protocol layer is any one of an MAC layer, a BAP layer, an RLC layer, a PDCP layer, an RRC layer, an SDAP layer, an NAS, an application layer, and a positioning function protocol layer; and
the fifth protocol layer is a new protocol layer other than the MAC layer, the BAP layer, the RLC layer, the PDCP layer, the RRC layer, the SDAP layer, the NAS, the application layer, and the positioning function protocol layer.

25. The method of any one of claims 21 to 24, wherein
the lower protocol layer or the same protocol layer or the another protocol layer is any one of a PHY layer, an MAC layer, a BAP layer, an RLC layer, a PDCP layer, an RRC layer, an SDAP layer, an NAS, an application layer, and a positioning function protocol layer; or
the lower protocol layer or the same protocol layer or the another protocol layer is a new protocol layer other than the PHY layer, the MAC layer, the BAP layer, the RLC layer, the PDCP layer, the RRC layer, the SDAP layer, the NAS, the application layer, and the positioning function protocol layer.

26. The method of any one of claims 21 to 25, wherein any one of the at least one AI information data packet at least comprises a data packet number information field and an AI information data field, wherein the AI information data field contains all or part of the AI information.

27. The method of claim 26, wherein any one of the at least one AI information data packet further comprises at least one of a model identity information field, a model description information field, a data packet importance-level indication information field, or a data packet QoS indication information field.

28. The method of any one of claims 21 to 27, wherein the at least one AI information data packet comprises: an AI information data packet indicating start of transmission of the AI information and/or an AI information data packet indicating end of transmission of the AI information.

29. The method of claim 21, wherein the fourth functional entity is contained in a sixth protocol layer, or the fourth functional entity is a non-protocol-layer functional entity; and
the sixth protocol layer is any one of a PHY layer, an MAC layer, a BAP layer, an RLC layer, a PDCP layer, an RRC layer, an SDAP layer, an NAS, an application layer, and a positioning function protocol layer; or the sixth protocol layer is a new protocol layer other than the PHY layer, the MAC layer, the BAP layer, the RLC layer, the PDCP layer, the RRC layer, the SDAP layer, the NAS, the application layer, and the positioning function protocol layer.

30. The method of any one of claims 21 to 29, wherein the at least one of the AI information transmission processing functions is performed by a same third functional entity or each performed by a different third functional entity, or at least two of the AI information transmission processing functions are performed by different third functional entities.

31. The method of any one of claims 21 to 30, wherein a same set of AI information is transmitted on one or more session resources, each session identity is associated with one or more RB resources, and all RB resources associated with a same session identity are associated with a same third functional entity.

32. The method of any one of claims 21 to 30, wherein a same set of AI information is associated with same model identity information and is transmitted on one or more RB resources, and all RB resources associated with each model identity information are associated with a same third functional entity.

33. The method of any one of claims 21 to 30, wherein a same set of AI information is transmitted on one or more RB resources, and one RB resource or a group of RB resources associated with each set of AI information is associated with a same third functional entity.

34. The method of any one of claims 21 to 33, further comprising:
sending, by the first device, a transmission requirement message to the second device, wherein the transmission requirement message indicates at least one set of AI information to be uploaded by the first device.

35. The method of any one of claims 21 to 34, further comprising:
receiving, by the first device, a transmission request message from the second device, wherein the transmission request message indicates the first device to upload at least one set of AI information to the second device.

36. The method of any one of claims 1 to 35, further comprising:
receiving, by the first device, configuration information from the second device, wherein the configuration information is used for configuring or indicates the transmission resource configuration.

37. The method of claim 36, further comprising:
sending, by the first device, response information to the second device, wherein the response information is used for confirming that the configuration information is successfully received.

38. The method of any one of claims 1 to 37, wherein the transmission resource configuration comprises at least one of:
at least one RB identity information;
model identity information associated with the AI information;
session identity information associated with the AI information;
number information associated with a last AI information data packet corresponding to the AI information;
information of a total number of AI information data packets corresponding to the AI information;
data importance-level indication information associated with the AI information;
data QoS parameter information associated with the AI information;
model description information associated with the AI information;
a related configuration of the at least one first functional entity;
destination identity information associated with the AI information; or
number information associated with a first AI information data packet corresponding to the AI information.

39. The method of any one of claims 1 to 38, wherein the AI information comprises at least one of:
model identity information;
model description information; or
model algorithm data information.

40. The method of any one of claims 1 to 39, wherein the first device and the second device satisfy one of:
the first device being a terminal device, and the second device being a network device; or
the first device being the network device, and the second device being the terminal device; or
the first device and the second device each being the network device; or
the first device and the second device each being the terminal device.

41. An information transmission method, performed by a second device and comprising:
transmitting, by the second device, artificial intelligence (AI) information by using a transmission resource configuration sent to a first device, wherein the AI information is information related to an AI/machine learning (ML) model.

42. The method of claim 41, wherein transmitting, by the second device, the AI information by using the transmission resource configuration sent to the first device comprises:
sending, by the second device, the AI information to the first device by using the transmission resource configuration sent to the first device; and/or
receiving, by the second device, the AI information from the first device by using the transmission resource configuration sent to the first device.

43. The method of claim 42, wherein the second device sends the AI information to the first device, the second device comprises at least one third functional entity, and the at least one third functional entity performs at least one of the following AI information transmission processing functions:
receiving the AI information delivered by a fourth functional entity;
splitting the AI information into at least one AI information data packet;
associating each of the at least one AI information data packet with quality of service (QoS) parameter information;
associating each of the at least one AI information data packet with importance-level indication information;
delivering at least one processed AI information data packet to a lower protocol layer or another protocol layer or another functional entity in a same protocol layer; or
receiving a first message, wherein the first message is used for notifying the second device that the AI information is successfully reassembled or is not successfully reassembled.

44. The method of claim 43, wherein the at least one third functional entity delivers the at least one processed AI information data packet to the lower protocol layer;
the at least one third functional entity is contained in a fourth protocol layer or a fifth protocol layer;
the fourth protocol layer is any one of a media access control (MAC) layer, a backhaul adaptation protocol (BAP) layer, a radio link control (RLC) layer, a packet data convergence protocol (PDCP) layer, a radio resource control (RRC) layer, a service data adaptation protocol (SDAP) layer, a non-access stratum (NAS), an application layer, and a positioning function protocol layer; and
the fifth protocol layer is a new protocol layer other than the MAC layer, the BAP layer, the RLC layer, the PDCP layer, the RRC layer, the SDAP layer, the NAS, the application layer, and the positioning function protocol layer.

45. The method of claim 43, wherein the at least one third functional entity delivers the at least one processed AI information data packet to the another protocol layer; and
the at least one third functional entity is not part of protocol layer functions, or the at least one third functional entity is a non-protocol-layer functional entity.

46. The method of claim 43, wherein the at least one third functional entity delivers the at least one processed AI information data packet to the another functional entity in the same protocol layer;
the at least one third functional entity is contained in a fourth protocol layer or a fifth protocol layer;
the fourth protocol layer is any one of an MAC layer, a BAP layer, an RLC layer, a PDCP layer, an RRC layer, an SDAP layer, an NAS, an application layer, and a positioning function protocol layer; and
the fifth protocol layer is a new protocol layer other than the MAC layer, the BAP layer, the RLC layer, the PDCP layer, the RRC layer, the SDAP layer, the NAS, the application layer, and the positioning function protocol layer.

47. The method of any one of claims 43 to 46, wherein
the lower protocol layer or the same protocol layer or the another protocol layer is any one of a physical (PHY) layer, an MAC layer, a BAP layer, an RLC layer, a PDCP layer, an RRC layer, an SDAP layer, an NAS, an application layer, and a positioning function protocol layer; or
the lower protocol layer or the same protocol layer or the another protocol layer is a new protocol layer other than the PHY layer, the MAC layer, the BAP layer, the RLC layer, the PDCP layer, the RRC layer, the SDAP layer, the NAS, the application layer, and the positioning function protocol layer.

48. The method of any one of claims 43 to 47, wherein any one of the at least one AI information data packet at least comprises a data packet number information field and an AI information data field, wherein the AI information data field contains all or part of the AI information.

49. The method of claim 48, wherein any one of the at least one AI information data packet further comprises at least one of a model identity information field, a model description information field, a data packet importance-level indication information field, or a data packet QoS indication information field.

50. The method of any one of claims 43 to 49, wherein the at least one AI information data packet comprises: an AI information data packet indicating start of transmission of the AI information and/or an AI information data packet indicating end of transmission of the AI information.

51. The method of claim 43, wherein the fourth functional entity is contained in a sixth protocol layer, or the fourth functional entity is a non-protocol-layer functional entity; and
the sixth protocol layer is any one of a PHY layer, an MAC layer, a BAP layer, an RLC layer, a PDCP layer, an RRC layer, an SDAP layer, an NAS, an application layer, and a positioning function protocol layer; or the sixth protocol layer is a new protocol layer other than the PHY layer, the MAC layer, the BAP layer, the RLC layer, the PDCP layer, the RRC layer, the SDAP layer, the NAS, the application layer, and the positioning function protocol layer.

52. The method of any one of claims 43 to 51, wherein the at least one of the AI information transmission processing functions is performed by a same third functional entity or each performed by a different third functional entity, or at least two of the AI information transmission processing functions are performed by different third functional entities.

53. The method of any one of claims 43 to 52, wherein a same set of AI information is transmitted on one or more session resources, each session identity is associated with one or more radio bearer (RB) resources, and all RB resources associated with a same session identity are associated with a same third functional entity.

54. The method of any one of claims 43 to 52, wherein a same set of AI information is associated with same model identity information and is transmitted on one or more RB resources, and all RB resources associated with each model identity information are associated with a same third functional entity.

55. The method of any one of claims 43 to 52, wherein a same set of AI information is transmitted on one or more RB resources, and one RB resource or a group of RB resources associated with each set of AI information is associated with a same third functional entity.

56. The method of claim 42, wherein the second device receives the AI information from the first device, the second device comprises at least one first functional entity, and the at least one first functional entity performs at least one of the following AI information transmission processing functions:
reassembling at least one AI information data packet delivered by a lower protocol layer or another protocol layer or another functional entity in a same protocol layer;
associating the reassembled AI information with model identity information, wherein the model identity information is used for identifying an AI/ML model associated with the AI information;
delivering the reassembled AI information to a second functional entity;
discarding an AI information data packet that is unable to be reassembled; or
generating a second message, wherein the second message is used for notifying the first device that the AI information is successfully reassembled or is not successfully reassembled.

57. The method of claim 56, wherein the at least one AI information data packet is delivered by the lower protocol layer to the at least one first functional entity;
the at least one first functional entity is contained in a first protocol layer or a second protocol layer;
the first protocol layer is any one of an MAC layer, a BAP layer, an RLC layer, a PDCP layer, an RRC layer, an SDAP layer, an NAS, an application layer, and a positioning function protocol layer; and
the second protocol layer is a new protocol layer other than the MAC layer, the BAP layer, the RLC layer, the PDCP layer, the RRC layer, the SDAP layer, the NAS, the application layer, and the positioning function protocol layer.

58. The method of claim 56, wherein the at least one AI information data packet is delivered by the another protocol layer to the at least one first functional entity; and
the at least one first functional entity is not part of protocol layer functions, or the at least one first functional entity is a non-protocol-layer functional entity.

59. The method of claim 56, wherein the at least one AI information data packet is delivered by the another functional entity in the same protocol layer to the at least one first functional entity;
the at least one first functional entity is contained in a first protocol layer or a second protocol layer;
the first protocol layer is any one of an MAC layer, a BAP layer, an RLC layer, a PDCP layer, an RRC layer, an SDAP layer, an NAS, an application layer, and a positioning function protocol layer; and
the second protocol layer is a new protocol layer other than the MAC layer, the BAP layer, the RLC layer, the PDCP layer, the RRC layer, the SDAP layer, the NAS, the application layer, and the positioning function protocol layer.

60. The method of any one of claims 56 to 59, wherein
the lower protocol layer or the same protocol layer or the another protocol layer is any one of a PHY layer, an MAC layer, a BAP layer, an RLC layer, a PDCP layer, an RRC layer, an SDAP layer, an NAS, an application layer, and a positioning function protocol layer; or
the lower protocol layer or the same protocol layer or the another protocol layer is a new protocol layer other than the PHY layer, the MAC layer, the BAP layer, the RLC layer, the PDCP layer, the RRC layer, the SDAP layer, the NAS, the application layer, and the positioning function protocol layer.

61. The method of any one of claims 56 to 60, wherein any one of the at least one AI information data packet at least comprises a data packet number information field and an AI information data field, wherein the AI information data field contains all or part of the AI information.

62. The method of claim 61, wherein any one of the at least one AI information data packet further comprises at least one of a model identity information field, a model description information field, a data packet importance-level indication information field, or a data packet QoS indication information field.

63. The method of any one of claims 56 to 62, wherein the at least one AI information data packet comprises: an AI information data packet indicating start of transmission of the AI information and/or an AI information data packet indicating end of transmission of the AI information.

64. The method any one of claims 56 to 63, wherein
the AI information is in one-to-one association with or in many-to-one association with the model identity information.

65. The method of any one of claims 56 to 64, wherein the second functional entity is contained in a third protocol layer, or the second functional entity is a non-protocol-layer functional entity; and
the third protocol layer is any one of a PHY layer, an MAC layer, a BAP layer, an RLC layer, a PDCP layer, an RRC layer, an SDAP layer, an NAS, an application layer, and a positioning function protocol layer; or the third protocol layer is a new protocol layer other than the PHY layer, the MAC layer, the BAP layer, the RLC layer, the PDCP layer, the RRC layer, the SDAP layer, the NAS, the application layer, and the positioning function protocol layer.

66. The method of claim 65, wherein the at least one first functional entity routes or delivers the AI information to the second functional entity based on at least one of:
the AI information;
model identity information associated with the AI information; or
destination identity information associated with the AI information.

67. The method of any one of claims 56 to 66, wherein discarding, by the at least one first functional entity, the AI information data packet that is unable to be reassembled comprises:
discarding, by the at least one first functional entity based on a model reassembly timer, the AI information data packet that is unable to be reassembled, wherein
the model reassembly timer is associated with data packet reassembly of the at least one first functional entity.

68. The method of claim 67, wherein discarding, by the at least one first functional entity based on the model reassembly timer, the AI information data packet that is unable to be reassembled comprises:
discarding, by the at least one first functional entity, all AI information data packets or an AI information data packet that has not been reassembled, when the model reassembly timer expires.

69. The method of claim 67 or 68, further comprising:
starting, by the at least one first functional entity, the model reassembly timer in response to receiving a first AI information data packet associated with the AI information; or
starting, by the at least one first functional entity, the model reassembly timer in response to receiving an AI information data packet with number 0 or number 1 or a minimum number associated with the AI information; or
starting, by the at least one first functional entity, the model reassembly timer in response to receiving a last AI information data packet or an AI information data packet with a maximum number associated with the AI information; or
starting, by the at least one first functional entity, the model reassembly timer when a silence timer expires, wherein
the silence timer is restarted in response to an AI information data packet being received within a timing period, and expires in response to no AI information data packet being received within the timing period.

70. The method of any one of claims 56 to 69, wherein the at least one of the AI information transmission processing functions is performed by a same first functional entity or each performed by a different first functional entity, or at least two of the AI information transmission processing functions are performed by different first functional entities.

71. The method of any one of claims 56 to 70, wherein a same set of AI information is transmitted on one or more session resources, each session identity is associated with one or more RB resources, and all RB resources associated with a same session identity are associated with a same first functional entity.

72. The method of any one of claims 56 to 70, wherein a same set of AI information is associated with same model identity information and is transmitted on one or more RB resources, and all RB resources associated with each model identity information are associated with a same first functional entity.

73. The method of any one of claims 56 to 70, wherein a same set of AI information is transmitted on one or more RB resources, and one RB resource or a group of RB resources associated with each set of AI information is associated with a same first functional entity.

74. The method of any one of claims 43 to 55, further comprising:
receiving, by the second device, a transmission requirement message from the first device, wherein the transmission requirement message indicates at least one set of AI information to be uploaded by the first device.

75. The method of any one of claims 43 to 55 and claim 74, further comprising:
sending, by the second device, a transmission request message, wherein the transmission request message indicates the first device to upload at least one set of AI information to the second device.

76. The method of any one of claims 41 to 75, further comprising:
sending, by the second device, configuration information to the first device, wherein the configuration information is used for configuring or indicates the transmission resource configuration.

77. The method of claim 76, further comprising:
receiving, by the second device, response information from the first device, wherein the response information is used for confirming that the configuration information is successfully received.

78. The method of any one of claims 41 to 77, wherein the transmission resource configuration comprises at least one of:
at least one RB identity information;
model identity information associated with the AI information;
session identity information associated with the AI information;
number information associated with a last AI information data packet corresponding to the AI information;
information of a total number of AI information data packets corresponding to the AI information;
data importance-level indication information associated with the AI information;
data QoS parameter information associated with the AI information;
model description information associated with the AI information;
a related configuration of the at least one third functional entity;
destination identity information associated with the AI information; or
number information associated with a first AI information data packet corresponding to the AI information.

79. The method of any one of claims 41 to 78, wherein the AI information comprises at least one of:
model identity information;
model description information; or
model algorithm data information.

80. The method of any one of claims 41 to 79, wherein the first device and the second device satisfy one of:
the first device being a terminal device, and the second device being a network device; or
the first device being the network device, and the second device being the terminal device; or
the first device and the second device each being the network device; or
the first device and the second device each being the terminal device.

81. An information transmission apparatus, comprising:
a first transmitting module configured to transmit artificial intelligence (AI) information by using a transmission resource configuration sent by a second device, wherein the AI information is information related to an AI/machine learning (ML) model.

82. An information transmission apparatus, comprising:
a second transmitting module configured to transmit artificial intelligence (AI) information by using a transmission resource configuration sent to a first device, wherein the AI information is information related to an AI/machine learning (ML) model.

83. A first device, comprising:
a processor;
a transceiver coupled with the processor; and
a memory configured to store executable instructions of the processor, wherein
the processor is configured to load and execute the executable instructions to implement the information transmission method of any one of claims 1 to 40.

84. A second device, comprising:
a processor;
a transceiver coupled with the processor; and
a memory configured to store executable instructions of the processor, wherein
the processor is configured to load and execute the executable instructions to implement the information transmission method of any one of claims 41 to 80.

85. A computer-readable storage medium configured to store a computer program which is loaded and executed by a processor to implement the information transmission method of any one of claims 1 to 80.

86. A computer program product comprising computer instructions, wherein the computer instructions are stored in a computer-readable storage medium, and when loaded and executed by a processor, cause the processor to implement the information transmission method of any one of claims 1 to 80.

87. A computer program comprising computer instructions, wherein the computer instructions are stored in a computer-readable storage medium, and when loaded and executed by a processor, cause the processor to implement the information transmission method of any one of claims 1 to 80.
